# EUROPEAN PATENT SPECIFICATION

(11) **EP 4 375 811 B1**
(45) Date of publication and mention of the grant of the patent: **08.07.2026**
(21) Application number: 22306732.3
(22) Date of filing: 24.11.2022
(51) Int. Cl.: G06F 3/0338, G06F 3/0362, G06F 3/0485, G06F 3/04842

(54) **USER-BORNE DEVICE WITH MAGNETIC DETECTION OF SCROLL CONTROL**
BENUTZERGETRAGENES GERÄT MIT MAGNETISCHER ERKENNUNG DER BILDLAUFSTEUERUNG
DISPOSITIF PORTÉ PAR L'UTILISATEUR AVEC DÉTECTION MAGNÉTIQUE DU CONTRÔLE DE DÉFILEMENT

(43) Date of publication of application: 29.05.2024
(73) Proprietor: Advanced Magnetic Interaction, AMI, 38170 Seyssinet-Pariset (FR)
(72) Inventor: Hautson, Tristan, 38170 Seyssinet-Pariset (FR); Pellerano, Vincent Thomas, 38170 Seyssinet-Pariset (FR); Jobert, Timothée, 38170 Seyssinet-Pariset (FR); Vallejo, Jean-Luc, 38170 Seyssinet-Pariset (FR)
(74) Representative: Peterreins Schley

(56) References cited:
- US-A1- 2005 190 146
- US-A1- 2010 265 176
- US-A1- 2012 306 603
- US-A1- 2019 025 947
- US-A1- 2019 113 889
- US-B1- 11 009 973

## Description

### TECHNICAL FIELD

The present disclosure relates to the technical field of determining and/or tracking a location of passive accessories, more specifically to a user-borne device and to a system for determining a manipulation of a user-borne device by a user.

### BACKGROUND

In the technical field of location determination and/or tracking of a device held or worn by user (i.e., a user-borne device), the provision of a plurality of magnetometers allows to measure a magnetic field associated with a magnetic object arranged in or coupled to the user-borne device. The user-borne devices using this technology may be electronically and/or electrically passive. More specifically, electrically passive means that the user-borne device may not comprise a power source (e.g., batteries) and/or means to receive power (e.g., wireless power transmission via an inductive coil) for powering an electronic feature of the user-borne device. Electronically passive means that no computation or processing occurs (or happens) on the user-borne device. The magnetometer measurements enable determining and/or tracking of the location of the magnetic object within a sensing volume created by the plurality of magnetometers. In some applications, the magnetic object may be arranged within a writing device (e.g., a stylus) which may be operated by a user on a writing support during a user operation. Based on the magnetic field measurements associated with the magnetic object, a location of the writing device on the writing support may be determined.

In current applications, a magnetic object arranged in or coupled to a user-borne device may be approximated by a dipole to allow its location determination and/or tracking within a sensing volume created by the plurality of magnetometers. The magnetic object approximated as a dipole may create a magnetic field which is rotationally symmetric about at least one axis. Such a magnetic object may be manipulated by a user within the sensing volume and may allow a tracking and/or location determination of its movement in five degrees of freedom. The five degrees of freedom may include a translation of the magnetic object (and the user-borne device, to which the magnetic object is coupled to) along three axes, a first rotation about a first axis and a second rotation about a second axis. However, a rotation of the magnetic object about the at least one axis, to which the magnetic field is rotationally symmetric, may not be detectable. As a result, application fields and areas in passive accessory location determination and/or tracking may be limited. More specifically, certain movements of the magnetic object and/or of the user-borne device may not be detectable and may limit specific additional functions of the user-borne device.

The object of the present disclosure is to provide a user-borne device and a system for determining a manipulation of a user-borne device by a user which enable improved functionalities in different application fields.

Document US20190025947A1 relates to a mouse device, including a scroll wheel, a scroll wheel resolution switching element, a magnetic induction element, and a processing unit connected to the scroll wheel resolution switching element. Document US11009973B1 relates in general to information handling systems, and more particularly to a systems and methods for implementing a mouse having a scroll wheel with two spin speeds. Document US20100265176A1 discloses various finger tip controlled manual interface devices that can be used as inputs to personal computers, electromechanical systems and video game consoles utilize concentrically arranged magnets. Document US20190113889A1 discloses a wearable device and a method for performing one or more actions using a wearable device. Document US20120306603A1 discloses a user interface device including a floating actuator sub-assembly and a base assembly flexibly coupled to the floating actuator assembly. Document US20050190146A1 discloses an input generating device for use in a hand held electronic device having a housing includes a core formed in a planar and semicircular in shape, forming a peripheral edge extending around said core and a track slidably engaged with the peripheral side edge.

### SUMMARY

The present disclosure relates to a user-borne device as defined in claim 1, and a system for determining a manipulation of a user-borne device by a user as defined in claim 13. The dependent claims depict embodiments of the present disclosure.

According to a first aspect of the present disclosure, a user-borne device comprising a housing, at least one scroll manipulation feature and at least one magnetic object is provided. The user-borne device is electrically and/or electronically passive. The user-borne device is operable on an interaction surface. The at least one magnetic object defines a magnetic moment vector. The at least one scroll manipulation feature is movably coupled to the housing and actuatable by a user. The at least one magnetic object is arranged rotatable and/or translatable with respect to the housing. The at least one magnetic object is arranged in the housing and operationally coupled to the scroll manipulation feature such that an actuation of the scroll manipulation feature causes a rotation of the at least one magnetic object about a magnetic object rotation axis with respect to the housing. Thereby, additional functions can be integrated in the user-borne device and application fields of the user-borne device can be extended. More specifically, a scroll function can be integrated in the user-borne device. A scroll function may be applied to various different application fields. In examples, a scroll function may include a rotational and/or translational movement of a virtual object in a virtual environment that is associated with a user input. For instance, a scroll function may include scrolling of files or data, a rotational or translational movement of the virtual object associated with a selection of a choice from a plurality of choices. The scroll function associated include rotating a body in a virtual environment and/or changing a perspective in a virtual environment. For instance, a scroll function may include one or more of moving a cursor in two opposing directions, moving a displayed element (e.g. a page, a cursor) which may be controlled by the user-borne device 100, a step in a direction, flipping through a menu, flipping through a selection list, or adjusting (e.g. increasing or decreasing) a parameter (e.g. a setting or a configuration). This enables various new application fields for the user-borne device, for instance a dial, a computer mouse scroll (e.g. a scroll wheel or a tiltable scroll button), a joystick, a control for an electronic device (e.g. an audio control or a visual control), a control of software settings or visualizations (e.g. graphic software or design software), or a control of a computer game. The functionality of the user-borne device is improved, more specifically e.g., without providing additional magnetic objects. Additionally, manufacturing costs can be reduced in comparison to user-borne device which do not unite additional functions in one device but require a separate device to control an additional function. Furthermore, the usability can be improved for a user by the provision of the scroll manipulation feature as the user can associate a distinct function (scroll function) to the scroll manipulation feature.

According to a second aspect of the present disclosure, a system for determining a manipulation of a user-borne device by a user is provided. The system comprises a user-borne device according to the first aspect of the present disclosure, and a plurality of magnetometers. The plurality of magnetometers is configured to create a sensing volume. The plurality of magnetometers is further configured to measure a magnetic field associated with the at least one magnetic object. The system is further to track a movement of the at least one magnetic object in at least five degrees of freedom. The system is further configured to determine a scroll event when the tracked movement includes a rotation of the at least one magnetic object about the magnetic object rotation axis. Thereby, additional functions can be integrated in the user-borne device and application fields of the user-borne device can be extended. More specifically, a scroll function can be integrated in the user-borne device. The system can provide a scroll function by associating the tracked movement of the magnetic object to a scroll event. In examples, the term "scroll event" may be a control mode of a function in a virtual environment that is associated with a user input. The control mode may result in a rotational and/or translational movement of a virtual object in the virtual environment. The function associated with the scroll event may be denoted a "scroll function". The scroll function may be applied to various different application fields. In examples, a scroll function may include a rotational and/or translational movement of a virtual object in a virtual environment that is associated with a user input. For instance, a scroll function may include scrolling of files or data, a rotational or translational movement of the virtual object associated with a selection of a choice from a plurality of choices. The scroll function associated include rotating a body in a virtual environment and/or changing a perspective in a virtual environment. For instance, a scroll function may include one or more of moving a cursor in two opposing directions, moving a displayed element (e.g. a page, a cursor) which may be controlled by the user-borne device 100, a step in a direction, flipping through a menu, flipping through a selection list, or adjusting (e.g. increasing or decreasing) a parameter (e.g. a setting or a configuration). This enables various new application fields for the user-borne device, for instance a dial, a computer mouse scroll (e.g. a scroll wheel or a tiltable scroll button), a joystick, a control for an electronic device (e.g. an audio control or a visual control), a control of software settings or visualizations (e.g. graphic software or design software), or a control of a computer game. The functionality of the user-borne device is improved, more specifically e.g., without providing additional magnetic objects. Additionally, manufacturing costs can be reduced in comparison to user-borne device which do not unite additional functions in one device but require a separate device to control an additional function. Furthermore, the usability can be improved for a user by the provision of the scroll manipulation feature as the user can associate a distinct function (scroll function) to the scroll manipulation feature.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **Fig. 1**: is a schematic view of a first embodiment of a user-borne device and a system for determining a manipulation of a user-borne device by a user according to aspects of the present disclosure;
- **Fig. 2A and 2B**: are schematic views of a first arrangement of a user-borne device with a magnetic object in an initial state;
- **Fig. 3A and 3B**: are schematic views of the first arrangement of a user-borne device with a magnetic object in a displaced state;
- **Figs. 4A to 4C**: are schematic views of a second arrangement of a user-borne device with a magnetic object in an initial state and in a displaced state;
- **Fig. 4D**: is a schematic chart depicting an exemplary curve of the first rotation angle of a magnetic object of the second arrangement of a user-borne device;
- **Figs. 5A and 5B**: are schematic views of a third arrangement of a user-borne device with a magnetic object in an initial state;
- **Fig. 5C**: is a schematic view of the third arrangement of a user-borne device with a magnetic object in a displaced state;
- **Figs. 6A and 6B**: are schematic views of transmission devices comprising a gear transmission of a scroll manipulation feature;
- **Fig. 7**: is a schematic view of transmission devices comprising a lever transmission of a scroll manipulation feature;
- **Figs. 8A and 8B**: are schematic views of a fifth arrangement of a user-borne device with a magnetic object in an initial state;
- **Figs. 9A and 9B**: are schematic views of the fifth arrangement of a user-borne device with a magnetic object in a displaced state;
- **Figs. 10A and 10B**: are schematic views of transmission devices of a click manipulation feature;
- **Figs. 11A and 11B**: are schematic views of a sixth arrangement of a user-borne device with two magnetic objects;
- **Figs. 12A to 12C**: are schematic views of a seventh arrangement of a user-borne device with two magnetic objects;
- **Figs. 13A and 13B**: are schematic views of an eight arrangement of a user-borne device with three magnetic objects;
- **Figs. 14A and 14B**: are schematic views of a fourth arrangement of a user-borne device with a magnetic object.

### DETAILED DESCRIPTION

Embodiments of the user-borne device and the system for determining a manipulation of a user-borne device by a user, according to the present disclosure will be described in reference to the drawings as follows.

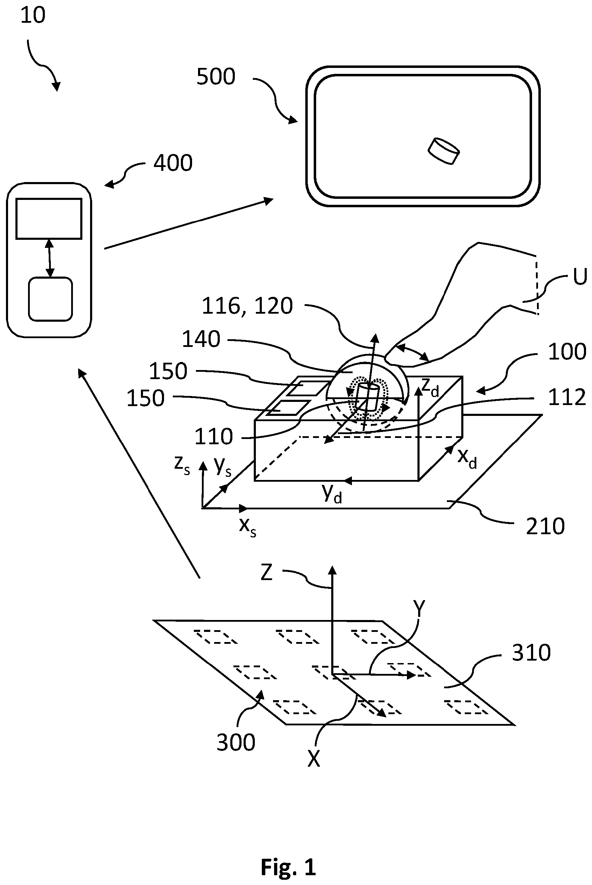

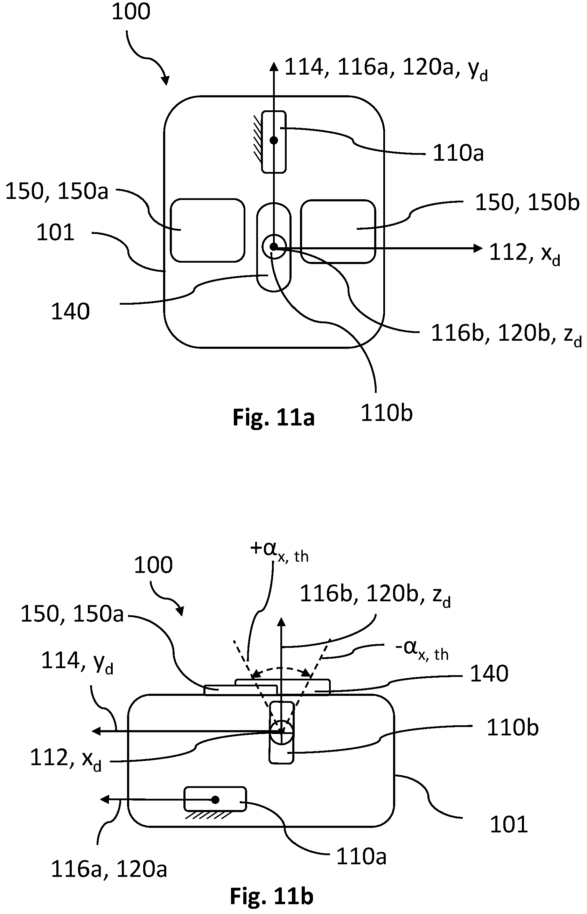

Fig. 1 schematically illustrates a user-borne device 100 and a system 10 for determining a manipulation of the user-borne device 100 by a user U according to aspects of the present disclosure. The user-borne device 100 comprises a housing 101, at least one scroll manipulation feature 140 and at least one magnetic object 110. The at least one scroll manipulation feature 140 is movably coupled to the housing 101 and actuatable by a user U. The at least one magnetic object 110 defines a magnetic moment vector 120, and is arranged rotatable with respect to the housing 101. More specifically, the at least one magnetic object 110 may be modelized as a magnetic moment vector 120. However, it should be understood that the magnetic object 110 may be arranged rotatable and/or translatable with respect to the housing 101. The at least one magnetic object 110 is arranged in the housing 101 and operationally coupled to the scroll manipulation feature 140 such that an actuation of the scroll manipulation feature 140 causes a rotation of the at least one magnetic object 110 about a magnetic object rotation axis 112 with respect to the housing 101. Although Fig. 1 shows only one scroll manipulation feature 140 which is coupled the magnetic object 110, in other embodiments, two or more scroll manipulation features 140 operationally coupled to a respective magnetic object 110 may be comprised in the user-borne device 100. Fig. 1 further shows two click manipulation features 150. The click manipulation features 150 may be operationally coupled to the same magnetic object 110 to which the scroll manipulation feature 140 is coupled, or the user-borne device 100, or the click manipulation features 150 may be operationally coupled to a common additional magnetic object (not shown) or to a respective one magnetic object of two additional magnetic objects. In the schematic illustration of Fig. 1 only one magnetic object 110 is shown, in other embodiments, the user-borne device 100 may comprise more than one magnetic objects 110 (see, for instance Figs. 11, 12, 13). Although, two click manipulation features 150 are shown in Fig. 1, the user-borne device 100 may generally comprise less than two, for instance one or none, or more than two, for instance three four or more, click manipulation features 150. As further schematically illustrated in Fig. 1, the user-borne device 100 is operable on an interaction surface 210. A scroll manipulation feature 140 and/or a click manipulation feature 150 may be generally denoted as a manipulation feature of the user-borne device 100.

The user-borne device 100 may be electrically and/or electronically passive. More specifically, electrically passive means that the user-borne device 100 may not comprise a power source (e.g., batteries) and/or means to receive power (e.g., wireless power transmission via an inductive coil) for powering a feature (e.g., an electronic feature) of the user-borne device 100. Electronically passive means that no computation or processing occurs (or happens) on the user-borne device 100. Thereby, the user-borne device 100 can be easily recycled causing less impact on the environment. Specifically, when the magnetic object is a permanent magnet, the permanent magnet can be reused.

The term "magnetic object" may refer to an object which may comprise components made of magnetic material, i.e., a material that has magnetic properties measurable by a plurality of magnetometers 300. The magnetic object 110 may be a permanent magnet. In embodiments, the magnetic object 110 may be configured to generate a non-zero magnetic field. In embodiments, the at least one magnetic object 110 may comprise a paramagnetic or diamagnetic material.

In embodiments, the at least one magnetic object 110 may comprise a ferromagnetic material or a ferrimagnetic material. In embodiments, the magnetic object 110 may comprise a longitudinal body extending along a body axis 116. More specifically, the magnetic object 110 may comprise a length measured along the body axis 116 of the longitudinal body, a width and a thickness measured orthogonal with respect to the longitudinal body, whereby the length is larger than the width and the thickness. In embodiments, the longitudinal body may have a cylindrical shape whereby the body axis 116 is defined as the axis, e.g. height, of the cylinder (see, Fig. 1). In embodiments, the body of the magnetic object 110 may not be longitudinal. For instance, the length measure along the body axis 116 may be shorter than the width and the thickness. In such cases, the body may still have a cylindrical shape whereby the body axis 116 may define the axis, e.g. height, of the cylinder. In embodiments, the magnetic object 110 may have a non cylindrical body. For instance the magnetic object 110 may have a spherical body shape. When the body of the magnetic object 110 has a spherical shape, the body axis 116 may be defined as extending through a center of the spherical shape.

The body axis 116 defines the magnetic moment vector 120. In other words, the magnetic object 110 is magnetized in a magnetization direction along the body axis 116. In embodiments, the at least one magnetic object 110 may be axially magnetized along the body axis 116. The magnetization direction may represent the position of a north pole and south pole in the magnetic object 110. According to the magnetization direction, the magnetic object 110 may create an associated magnetic field. Specifically, the magnetic object 110 may be configured to create a symmetric magnetic field. More specifically, the magnetic object 110 may be configured to create a rotationally symmetric magnetic field. Specifically, the magnetic object rotation axis 112 does not coincide with the body axis 116. The expression "not coincide" can be understood as being "not identical". The expression "not coincide" may include embodiments wherein the magnetic object rotation axis 112 intersects with the body axis 116.

The magnetic moment vector 120 is indicative of magnetic object strength and/or the magnetization direction. The least one magnetic object 110 may be approximated by a magnetic dipole. Specifically, when the magnetic object 110 has a spherical shape, an approximation by a magnetic dipole may be suited. The approximation of the least one magnetic object 110 by a magnetic dipole may particularly be suited when the magnetic object is distanced form the plurality of magnetometers by a distance larger than a largest dimension of the magnetic object 110, particularly larger than a multiple (e.g. at least four times) of the largest dimension of the magnetic object 110. The least one magnetic object 110 may comprise a center of magnetic dipole. The center of magnetic dipole may coincide with a center of mass of the at least one magnetic object 110. The magnetic moment vector 120 may extend along the body axis 116 and may pass through the center of mass of the magnetic object 110.

Fig. 1 further discloses the system 10 for determining a manipulation of a user-borne device 100 by a user U. The system 10 comprises the user-borne device 100 according to any of the embodiments and/or features described herein. The system 10 further comprises a plurality of magnetometers 300. The plurality of magnetometers 300 is configured to measure a magnetic field created by the at least one magnetic object 110. The plurality of magnetometers 300 is configured to measure the magnetic field associated with the at least one magnetic object 110. The system 10 may be further configured to determine the magnetic moment vector 120 and a position vector indicative of a position of the magnetic object 110. More specifically, the magnetic moment vector 120 and the position vector may be derived from the measured magnetic field of the magnetic object 110 to represent the magnetic object 110. The system 10 is configured to track a movement of the at least one magnetic object 110 in at least five degrees of freedom. The system 10 is further configured to determine a scroll event when the tracked movement includes a rotation of the at least one magnetic object 110 about the magnetic object rotation axis 112. In embodiments which comprise a click manipulation feature 150, the system may be further configured to determine a click event as will be described further below. A scroll event and/or a click event may be generally denoted as a trigger event.

As outlined above, the term "scroll event" may be a control mode of a function in a virtual environment that is associated with a user input. The control mode may result in a rotational and/or translational movement of a virtual object in the virtual environment. The function associated with the scroll event may be denoted a "scroll function". The scroll function may be applied to various different application fields. In examples, a scroll function may include a rotational and/or translational movement of a virtual object in a virtual environment that is associated with a user input. For instance, a scroll function may include scrolling of files or data, a rotational or translational movement of the virtual object associated with a selection of a choice from a plurality of choices. The scroll function associated include rotating a body in a virtual environment and/or changing a perspective in a virtual environment. For instance, a scroll function may include one or more of moving a cursor in two opposing directions, moving a displayed element (e.g. a page, a cursor) which may be controlled by the user-borne device 100, a step in a direction, flipping through a menu, flipping through a selection list, or adjusting (e.g. increasing or decreasing) a parameter (e.g. a setting or a configuration). This enables various new application fields for the user-borne device, for instance a dial, a computer mouse scroll (e.g. a scroll wheel or a tiltable scroll button), a joystick, a control for an electronic device (e.g. an audio control or a visual control), a control of software settings or visualizations (e.g. graphic software or design software), or a control of a computer game.

A click event may include a selection of an object, e.g., a selection of an item, a selection of a list, a selection of an item on a list. A click event may trigger a following action. A click event may trigger a clicking action, a selecting action, a dragging action and/or a dragging-and-dropping action of an item, object or a word. A click event may further trigger an action which provides additional information and/or properties of an object, item or word selected.

The plurality of magnetometers 300 may be configured to create a sensing volume. The sensing volume may have an ellipsoidal form. The plurality of magnetometers 300 may be associated with a magnetometer plane 310 (see, Fig. 1). More specifically, the magnetometer plane 310 may be defined by a plane that may extend through a majority of the plurality of magnetometers 300. In some embodiments, the user-borne device 100 may be operable on an interaction surface 210. The interaction surface 210 may be defined within the sensing volume. The interaction surface 210 may comprise a first surface axis xₛ, a second surface axis yₛ, and a vertical surface axis zₛ, more specifically wherein the axes may be orthogonal with respect to each other (see, e.g., Fig. 1). The first surface axis xₛ and the second surface axis yₛ may be defined on the interaction surface 210. In embodiments, the plurality of magnetometers 300 may be integrated in a wall, a furniture, a notebook, a keyboard, an electronics device, a screen or display, and/or a mouse pad.

As shown in Fig. 1, the system 10 may comprise a reference coordinate system XYZ. The plurality of magnetometers 300 may be associated with the reference coordinate system XYZ. The system 10 is configured to define the reference coordinate system XYZ relative to the plurality of magnetometers 300. The reference coordinate system XYZ may comprise a first reference axis X, a second reference axis Y and a vertical reference axis Z. The first reference axis X and the second reference axis Y may be orthogonal to each other. The vertical reference axis Z may be orthogonal to the first reference axis X and the second reference axis Y. The vertical reference axis Z may extend through a center of the plurality of magnetometers 300. In embodiments, the first reference axis X and the second reference axis Y may be defined on the magnetometer plane 310. In this case, the vertical reference axis Z may be orthogonal to the magnetometer plane 310. The system 10 may be configured to determine a magnetic object location of the at least one magnetic object 110 based on the collected magnetic field measurements within the sensing volume relative to the reference coordinate system XYZ. The magnetic object location may include a magnetic object position and/or a magnetic object orientation associated with the at least one magnetic object 110 relative to the reference coordinate system XYZ.

As outlined above, the plurality of magnetometers 300 may be configured to measure a magnetic field associated with the magnetic object 110. Each magnetometer of the plurality of magnetometers 300 may be configured to measure the magnetic field associated with the at least one magnetic object 110 in the direction of the first reference axis X, the second reference axis Y, and/or the vertical reference axis Z. In other words, each magnetometer of the plurality of magnetometers 300 may be configured to perform magnetic field measurements in the direction of one axis (i.e., one dimension), two axes (i.e., two dimensions), or three axes (i.e., three dimensions). The number of magnetometers provided may depend on the size of the interaction surface 210, on which the user-borne device 100 is operated, or, on the desired size of the sensing volume within which the user-borne device 100 is operated. The plurality of magnetometers 300 may be configured to collect magnetic field measurements associated with the at least one magnetic object 110 within the sensing volume up to a maximum measurement distance. In embodiments, the maximum measurement distance may be 18cm, more specifically 15cm. In other embodiments, the maximum measurement distance may be larger than 18cm, for instance about 30cm depending on the magnetic strength of the magnetic object 110 which is to be measured or tracked. In embodiments, the maximum measurement distance may be defined between a furthest point on the interaction surface 210 or within the sensing volume to a closest magnetometer of the plurality of magnetometers 300.

The system 10 may be configured to determine an interaction surface location, wherein the interaction surface location may be indicative of an interaction surface position, an interaction surface orientation and/or an interaction surface distance relative to the reference coordinate system XYZ, more specifically to the magnetometer plane 310. For instance, the system may be configured to determine the interaction surface location based on known interaction surface location data defining a geometric position and/or a geometric location of the interaction surface 210 relative to the reference coordinate system XYZ.

The user-borne device 100 and/or the at least one magnetic object 110 may be mobile, i.e., freely movable within the reference coordinate system XYZ. In other words, during a user operation (i.e., an operation wherein the user-borne device 100 and/or the at least one magnetic object 110 is operated by a user), the user-borne device 100 within the sensing volume and/or relative to an interaction surface 210 may be manipulated by a user U within the sensing volume. The manipulation of the user-borne device 100 may include a manipulation of the location of the user-borne device 100 and/or a manipulation of one or more manipulation features (e.g. one or more scroll manipulation features 140 and/or one or more click manipulation features 150) of the user-borne device 100. The manipulation of the location of the user-borne device 100 may include a manipulation of an orientation of the user-borne device 100 and/or a manipulation of a position of the user-borne device 100. The manipulation features may include one or more scroll manipulation features 140 and/or one or more click manipulation features 150.

The system 10 may further comprise at least one output interface 500 (see, Fig. 1). The at least one output interface 500 may be configured to represent the user-borne device 100. More specifically the at least one output interface 500 may be configured to visually reproduce the user-borne device 100 as a virtual object. The system 10 may be configured to reproduce the manipulation of the user-borne device 100 as a manipulation of the virtual object on the at least one output interface 500. The system 10 may be configured to visually reproduce the scroll event and/or the click event on the at least one output interface 500. In embodiments, the output interface 500 may be a display or a screen. A translation of the user-borne device 100 in a direction on the interaction surface 210 may be represented as a translation of the represented user-borne device 100 on the at least one output device 500.

The system 10 may further comprise a processing unit 400. In embodiments, the system 10 may be connectable to a processing unit 400. The processing unit 400 may be configured to track a movement of the at least one magnetic object 110 in at least five degrees of freedom. The processing unit 400 may be further configured to determine a scroll event and/or a click event. In embodiments, the system 10 may comprise an electronics device. In embodiments, the processing unit 400 may be integrated in the electronics device. In embodiments, the electronics device may be a tablet, a cell phone, a laptop, a computer, a virtual reality (VR) set or a television.

In embodiments, the electronics device may be a VR set, more specifically an XR headset which may be a device worn on a user's head and configured to allow a user to experience virtual environments in real life (virtual reality environment, or VR environment). In embodiments, the user-borne device 100 may be reproduced as a virtual object in the virtual environment. In an embodiment, the user-borne device 100 may be displayed or reproduced as a virtual object in the VR environment allowing the user U to recognize where the user-borne device is located. A plurality of magnetometers 300 may be provided creating a sensing volume in which the user-borne device 100 is operated. A user-borne device location may be indicative of an orientation and/or a position of the user borne device 100 relative to the reference coordinate system XYZ, more specifically to the plurality of magnetometers 300. The reference coordinate system XYZ may be fixed in the VR environment. A position and/or orientation of the user-borne device 100 may be computed relative to the VR set, more specifically to the XR headset, and may be computed, particularly displayed to the user via the XR headset. In embodiments, the reference coordinate system XYZ may be dynamically evaluated from a tracking of VR environment of the XR headset. In embodiments, it may also be possible to provide an additional tracking system being fixed to the plurality of magnetometer 300 such as IR tracking, electromagnetic tracking or camera based tracking. Scroll event and/or click event may be generally denoted as a trigger event and the caused action may also be represented in the VR environment more specifically may be displayed to a user U via a display arranged in the XR headset. The representation in the VR environment may be done by changing a rendering parameter of the user-borne device 100, for instance color or light, and/or adding a specific sound. In some embodiments, the interaction surface 210 may be modeled in the VR environment, displayed to a user via the XR headset and/or used as an input to represent an interaction between the user-borne device 100 and the interaction surface 210 within the VR environment (e.g., representing the user-borne device 100 being operated on the interaction surface 210 within the VR environment). In some embodiments, the one or more output devices 500 may be represented as virtual displays or screens in the VR environment.

In embodiments, the system 10, more specifically, the processing unit 400 may be configured to track the user-borne device 100 and/or the at least one magnetic object 110 over a time period comprising multiple time samples. During a user operation, the system 10 may be configured to track a movement and/or a manipulation of the user-borne device 100 within the sensing volume and/or relative to the interaction surface 210 over a time period. More specifically the system 10 may be configured to determine a position and/or orientation of the at least one magnetic object 110 at each time sample and may store the determined locations (or interactions) for each time sample.

Referring back to Fig. 1, the user-borne device 100 may comprise a device coordinate system x_{d}, y_{d}, z_{d}. The device coordinate system may comprise a first device axis x_{d}, a second device axis y_{d} orthogonal to the first device axis x_{d}, and a vertical device axis z_{d}. The vertical device axis z_{d} may be orthogonal to a device contact surface or point and/or orthogonal to a plane defined by the first device axis x_{d} and the second device axis y_{d}. The device contact surface or point may be the part of the user-borne device 100 which, during a user operation, may be in contact with an interaction surface 210 (i.e., the surface on which the user-borne device 100 may be operated in some embodiments).

In examples, the user-borne device 100 may be a computer mouse (e.g., as shown in Fig. 1) or may be a dial (not shown). The user-borne device 100 (e.g. a computer mouse or a dial) may comprise a contact surface when contacting an interaction surface 210. More specifically, the first device axis x_{d} and the second device axis y_{d} may define a plane which is a bottom or bottom surface of the user-borne device 1001 . In embodiments, the first device axis x_{d} and the second device axis y_{d} may define a plane which is parallel to a bottom or bottom surface of the user-borne device 100. The bottom or bottom surface may define the contact surface. In specific embodiments, when in use by a user, the user-borne device 100 is configured to the placed and/or manipulated with the bottom surface on the interaction surface 210. In embodiments, the user-borne device 100 is configured to be translated on the interaction surface 210 along the first device axis x_{d} and/or the second device axis y_{d}.

In other examples (not shown), the user-borne device may comprise a contact point (e.g., a stylus or other writing device comprising a writing tip which contacts an interaction surface 210 during a writing operation). In other examples, the user-borne device 100 may be operated within the sensing volume but not on the interaction surface 210. In this case, the user-borne device 100 may be used, e.g., as a pointer. In some embodiments, the device coordinate system may be defined within a geometric center of the user-borne device 100.

In embodiments, the system 10 may be configured to determine a location of the user-borne device 100 based on the magnetic object location as described above and a first set of geometric parameters. The first set of geometric parameters may comprise predefined geometric parameters indicative of a geometric position and a geometric orientation of the at least one magnetic object 110 relative to the user-borne device 100, more specifically in an initial state of the at least one magnetic object 110 (the initial state will be described below). In other words, based on the determined location of the at least one magnetic object 110 and the knowledge of the arrangement of the at least one magnetic object 110 within the user-borne device 100 (more specifically relative to the device coordinate system), the user-borne device location may be known.

In embodiments, the system 10 may be configured to determine a location of the user-borne device 100 relative to the interaction surface 210 based on the magnetic field measurements. Specifically, the system 10 may be configured to assume a contact location of the user-borne device 100 relative to the interaction surface 210. More specifically, the system 10 may be configured to assume a contact location of the user-borne device 100 relative to the interaction surface 210 based on the determined user-borne device location and the determined interaction surface location. In examples, the system 10 may be configured to assume a contact of the user-borne device 100 with the interaction surface 210, when contact surface the user-borne device is within a distance of maximum 10mm, specifically a distance of maximum 5mm, more specifically a distance of maximum 2mm or 1mm to the interaction surface 210. The distance may be measured along the vertical surface axis zₛ.

As shown in the example of Fig. 1, the user-borne device 100 may be a computer mouse. However, generally, the user-borne device 100 may be a computer mouse, a keyboard, a toy, a stylus, or a dial.

As outlined above, an actuation of the scroll manipulation feature 140 causes a rotation of the at least one magnetic object 110 about the magnetic object rotation axis 112 with respect to the housing 101. Generally, the at least one scroll manipulation feature 140 defines a scroll wheel rotation axis 142a, tiltable button rotation axis 146a. The at least one scroll manipulation feature 140 is arranged and configured to be rotated about the scroll wheel rotation axis 142a, tiltable button rotation axis 146a with respect to the housing 101 upon actuation of the user U. Specifically, the at least one scroll manipulation feature 140 is rotatable in both senses of direction about scroll wheel rotation axis 142a, tiltable button rotation axis 146a. The scroll wheel rotation axis 142a, tiltable button rotation axis 146a may be parallel to the magnetic object rotation axis 112. Depending on the arrangement, two different types of scroll displacements of the magnetic object 110 between an initial state and a displaced state may be caused upon actuation of the scroll manipulation feature 140.

A first type of scroll displacement may include embodiments wherein the magnetic object rotation axis 112 is arranged not parallel to the body axis 116 (see, Figs. 1, 2, 3, 4, 5, 6, 7, 8, 9, 11, 12, 13). In other words, the magnetic object rotation axis 112 is arranged within the housing 110 inclinedly to the body axis 116. Thereby, a rotation of the at least one magnetic object 110 about the magnetic object rotation axis 112 causes an angular displacement of the body axis 116 between an initial state and a displaced state with respect to the housing 101. The angular displacement between the initial state and the displaced state can be measured along a first rotation angle αₓ about the magnetic object rotation axis 112. In other words, the first rotation angle αₓ is a measure for the angular displacement about the magnetic object rotation axis 112. In embodiments, in the initial state the first rotation angle αₓ may be about zero. In embodiments with more than one magnetic object 110, the magnetic object rotation axis 112 is associated to that magnetic object 110 which is operationally coupled to the scroll manipulation feature 140.

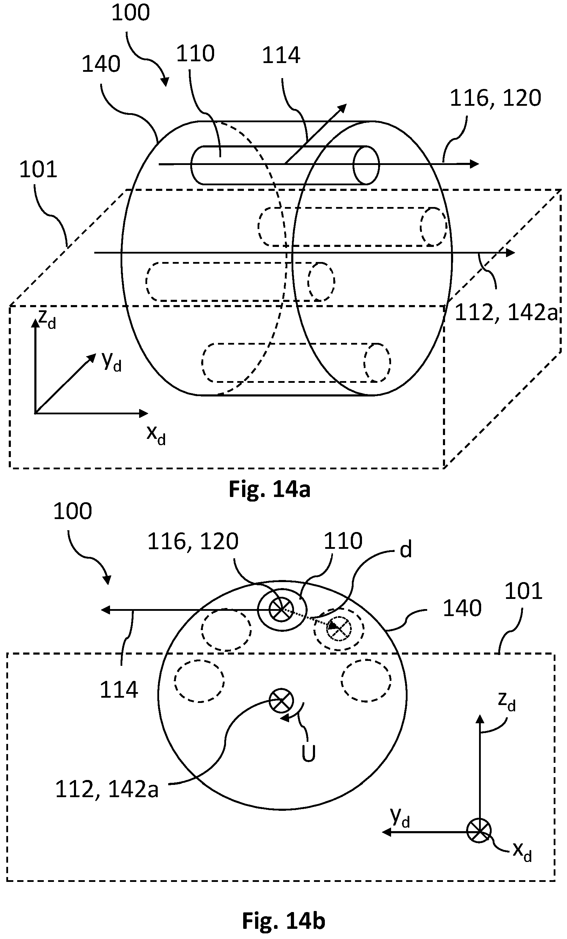

A second type of scroll displacement may include embodiments wherein the magnetic object rotation axis 112 is arranged parallel to and not coinciding with the body axis 116 (see, Figs. 14). In other words, the magnetic object rotation axis 112 is arranged within the housing 110 parallel the body axis 116. Thereby, a rotation of the at least one magnetic object 110 about the magnetic object rotation axis 112 causes translational displacement d of the body axis 116 between an initial state and a displaced state with respect to the housing 101. In other words, the translational displacement d is a measure for a movement of the magnetic object 110 orthogonally to the body axis 116 from the initial state to the displaced state with respect to the housing 101. In embodiments with more than one magnetic object 110, the magnetic object rotation axis 112 is associated to that magnetic object 110 which is operationally coupled to the scroll manipulation feature 140.

In the following, different example arrangements of user-borne devices 100 and associated systems 10 will be described. Generally, one or more aspects of an example arrangement may be combinable with one or more aspects of one or more other example arrangements.

### First example arrangement

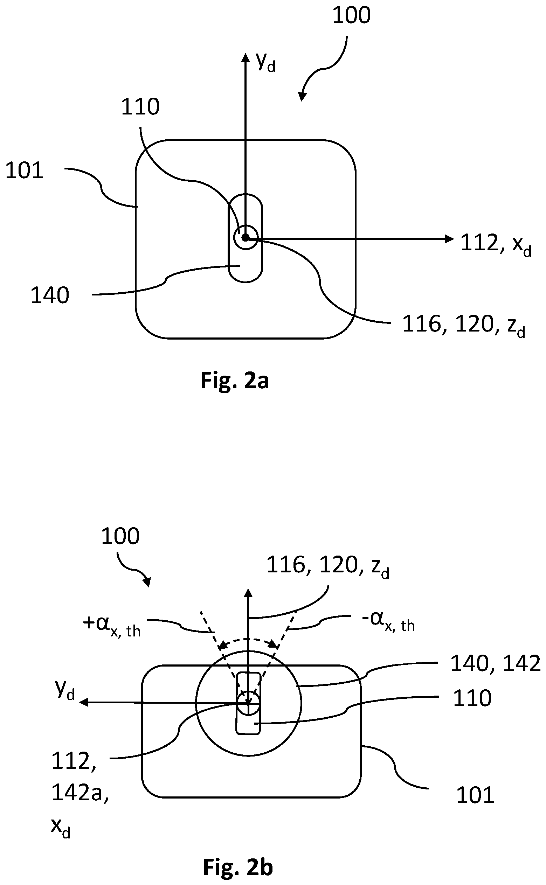

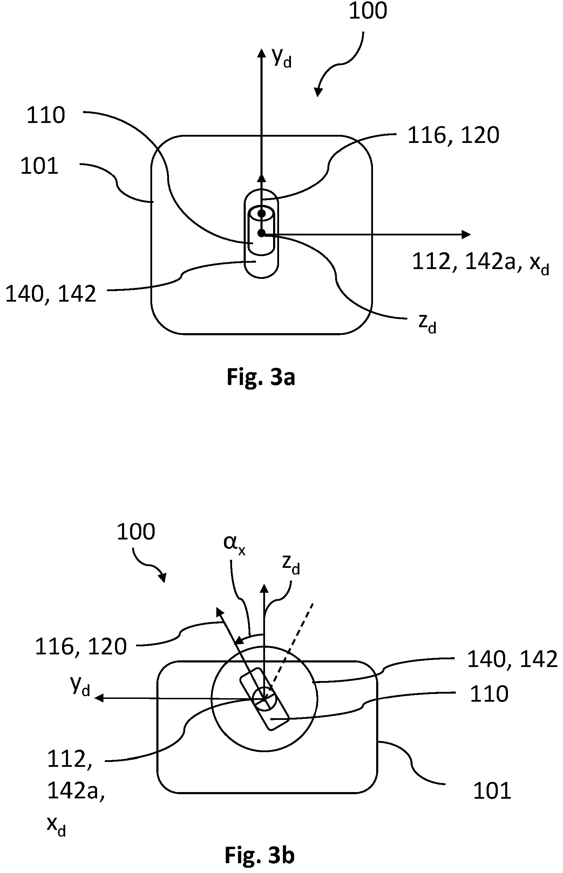

Figs. 2a, 2b, 3a, 3b show a first example arrangement of the user-borne device 100. The first example arrangement is configured according to the first type of scroll displacement. The magnetic object rotation axis 112 is arranged not parallel to the body axis 116. In other words, the magnetic object rotation axis 112 is arranged within the housing 110 inclinedly to the body axis 116. Thereby, a rotation of the at least one magnetic object 110 about the magnetic object rotation axis 112 causes an angular displacement of the body axis 116 between an initial state and a displaced state with respect to the housing 101. The angular displacement between the initial state and the displaced state can be measured along a first rotation angle αₓ about the magnetic object rotation axis 112. In other words, the first rotation angle αₓ is a measure for the angular displacement about the magnetic object rotation axis 112. In embodiments, in the initial state the first rotation angle αₓ may be about zero. The magnetic object rotation axis 112 is associated to the magnetic object 110 which is operationally coupled to the scroll manipulation feature 140. Figs. 2a, 2b show the scroll manipulation feature 140 in an exemplary unactuated position. Figs. 3a, 3b show the scroll manipulation feature 140 in an exemplary actuated position. In the unactuated position of the scroll manipulation feature 140, the at least one magnetic object 110 is in an exemplary initial state. In the actuated position of the scroll manipulation feature 140, the at least one magnetic object 110 is in an exemplary displaced state.

In the first example arrangement according to Figs. 2a, 2b, 3a, 3b, the scroll wheel rotation axis 142a of the scroll manipulation feature 140 may coincide with the magnetic object rotation axis 112 of the magnetic object 110. However, it should be understood that in variations of the first example arrangement, the scroll wheel rotation axis 142a of the scroll manipulation feature 140 may be distanced from the magnetic object rotation axis 112 of the magnetic object 110.

The scroll manipulation feature 140 comprises a scroll wheel 142 which defines the scroll wheel rotation axis 142a. In embodiments, wherein the at least one scroll manipulation feature 140 comprises a scroll wheel 142, the scroll wheel rotation axis 142a may also be referred to as scroll wheel axis 142a. The scroll wheel 142 may be arranged and configured to be rotated about the scroll wheel rotation axis 142a with respect to the housing 101 upon actuation of the user U. The magnetic object 110 is coupled to the scroll wheel 142.

Specifically, the at least one magnetic object 110 may be directly coupled to the scroll wheel 142. For instance, the magnetic object 110 may be attached in and/or to a center of the scroll wheel 142 (see, e.g., Fig. 2a). In aspects, the term "coupled" can be understood as "operationally coupled", e.g. such that a movement of the scroll manipulation feature 140 effects a movement of the at least one magnetic object 110. Directly coupled may be understood such that rotation of the scroll wheel 142 by one degree may result in a rotation of the body 116 axis by one degree.

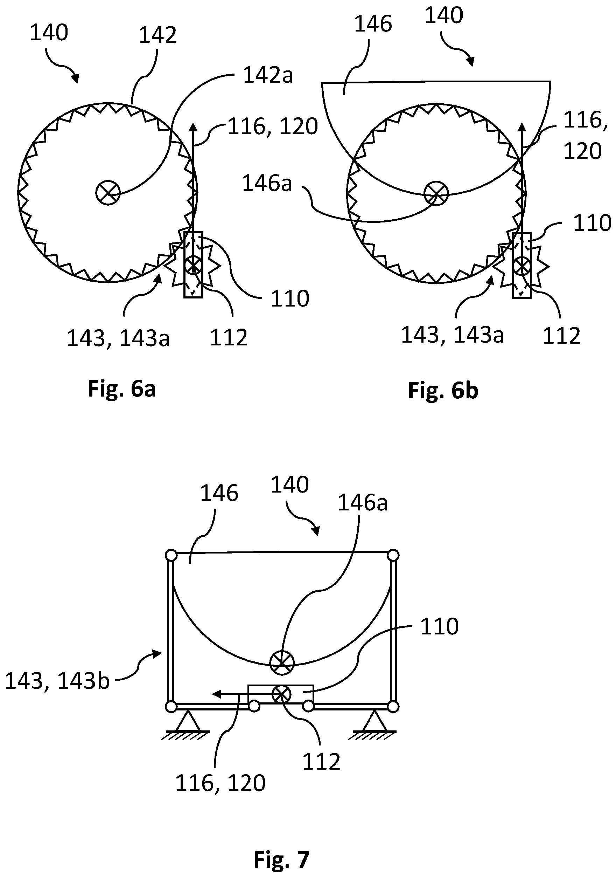

In embodiments, the scroll manipulation feature 140 may be indirectly coupled to the at least one magnetic object 110. For instance, the scroll manipulation feature 140 may further comprise a transmission device 143. The scroll wheel 142 may be coupled to the magnetic object 110 via the transmission device 143. The transmission device 143 may be configured to magnify a rotation of the magnetic object 110. In embodiments, the transmission device 143 may be configured to minify a rotation of the magnetic object 110. In embodiments, the transmission device 143 may comprise a gear transmission 143a and/or a lever transmission 143b (see, e.g., Figs. 6a, 6b, 7).

Again with reference to Figs. 2a, 2b, 3a, 3b, the scroll wheel rotation axis 142a of the scroll wheel 142 is arranged orthogonally to the vertical device axis z_{d}. Specifically, the scroll wheel rotation axis 142a of the scroll wheel 142 may be parallel or coinciding with the first device axis x_{d}. This may be particularly advantageous, when the user-borne device 100 is a computer mouse and/or wherein the second device axis y_{d} is pointing in a front direction of the computer mouse. As outlined above, the magnetic object rotation axis 112 is arranged not parallel to and not coinciding with the body axis 116. Furthermore, as shown in Figs. 2a, 2b, 3a, 3b the magnetic object 110 may be arranged such that the body axis 116 is not parallel to the scroll wheel rotation axis 142a of the scroll wheel 142. More specifically, the magnetic object 110 is arranged such that the body axis 116 is orthogonally to the scroll wheel rotation axis 142a of the scroll wheel 142. In embodiments, the magnetic object 110 may be arranged such that the body axis 116 is inclined to the scroll wheel rotation axis 142a of the scroll wheel 142.

Alternatively, to the scroll wheel rotation axis 142a of the scroll wheel 142 being arranged orthogonally to the vertical device axis z_{d}, the scroll wheel rotation axis 142a of the scroll wheel 142 may be arranged parallelly to the vertical device axis z_{d} (not shown). More specifically, the scroll wheel rotation axis 142a of the scroll wheel 142 may coincide with the vertical device axis z_{d}. This may be particularly advantageous, when the user-borne device 100 is a dial and/or wherein the vertical device axis z_{d} is arranged in a geometric center of the dial. The magnetic object 110 may be arranged such that the body axis 116 is not parallel to the scroll wheel rotation axis 142a of the scroll wheel 142. More specifically, the magnetic object 110 may be arranged such that the body axis 116 is orthogonally to the scroll wheel rotation axis 142a of the scroll wheel 142. The magnetic object 110 may be arranged such that the body axis 116 is arranged orthogonally the vertical device axis z_{d}. In embodiments , the magnetic object 110 may be arranged such that the body axis 116 is inclined to the scroll wheel rotation axis 142a of the scroll wheel 142 and/or inclined to the vertical device axis z_{d}.

As schematically illustrated in Fig. 2b, the scroll wheel 142 is rotatable in a first direction about the scroll wheel rotation axis 142a. Furthermore, the scroll wheel 142 is rotatable in a second direction about the scroll wheel rotation axis 142a which is opposite to the first direction about the scroll wheel rotation axis 142a. The magnetic object 110 is coupled to the scroll wheel 142 such that a rotation of the scroll wheel 142 in the first direction about the scroll wheel rotation axis 142a causes a rotation of the magnetic object 110 in a first direction about the magnetic object rotation axis 112. The magnetic object 110 is coupled to the scroll wheel 142 such that a rotation of the scroll wheel 142 in the second direction about the scroll wheel rotation axis 142a causes a rotation of the magnetic object 110 in a second direction about the magnetic object rotation axis 112 opposite to the first direction about the magnetic object rotation axis 112.

As outlined above, a rotation of the magnetic object 110 about the magnetic object rotation axis 112 causes an angular displacement αₓ of the body axis 116 between an initial state and a displaced state with respect to the housing 101. The system 10 is configured to detect the angular displacement αₓ of the body axis 116 about the magnetic object rotation axis 112. As further outlined above, the system 10 is configured to determine a scroll event when the tracked movement includes a rotation of the magnetic object 110 about the magnetic object rotation axis 112. The system 10 may be further configured to determine a scroll event only when an absolute value the first rotation angle αₓ exceeds a first rotation angle threshold αₓ, ₜₕ. Specifically, the system 10 may be configured to output a scroll step upon determining a scroll event. Just to name a few, a scroll step may involve depending on the scroll function, for instance, one or more of moving a selection cursor from one position to an adjacent position, or moving a displayed element, e.g. a page or a cursor, a step in a direction, or flipping one step through a menu or a selection list.

In embodiments, the first rotation angle threshold αₓ, ₜₕ may be set to a value between >0° and 15°. Specifically, the first rotation angle threshold αₓ, ₜₕ may be set to a value between 0.5° and 10°. More specifically, the first rotation angle threshold αₓ, ₜₕ may be set to a value between 1° and 5°. In some embodiments, the first rotation angle threshold αₓ, ₜₕ may be set to a value of about 1° +/- 0.5°. For instance, the first rotation angle threshold αₓ, ₜₕ may be set to a value of about 1°. In that regard, Figs. 3a, 3b exemplary shows an angular displacement αₓ in the first direction about the magnetic object rotation axis 112 which exceeds a first rotation angle threshold αₓ, ₜₕ. In embodiments, the system 10 may be configured to set the value of the first rotation angle αₓ to zero after determining a scroll event. In other words, after determining a scroll event, the magnetic object 110 is defined to be in the initial state.

In embodiments, the system 10 may be configured to distinguish between a scroll up event and a scroll down event. In examples, the system 10 may be configured to determine that a scroll event is a scroll up event when the body axis 116 is angularly displaced from the initial state in the first direction about the magnetic object rotation axis 112 to the displaced state. In examples, the system 10 may be configured to determine that a scroll event is a scroll down event when the body axis 116 is angularly displaced from the initial state in the second direction about the magnetic object rotation axis 112 to the displaced state. In more detail, a rotation of the body axis 116 in the first direction about the magnetic object rotation axis 112 may result in a positive value of the first rotation angle αₓ. In other words, the system 10 may be configured to define that a rotation of the body axis 116 in the first direction about the magnetic object rotation axis 112 results in a positive value of the first rotation angle αₓ. In examples, a positive value of the first rotation angle αₓ may be associated with a scroll up event. In other words, the system 10 may be configured to associate a positive value of the first rotation angle αₓ to a scroll up event. A rotation of the body axis 116 in the second direction about the magnetic object rotation axis 112 may result in a negative value of the first rotation angle αₓ. In other words, the system 10 may be configured to define that a rotation of the body axis 116 in the second direction about the magnetic object rotation axis 112 results in a negative value of the first rotation angle αₓ. In examples, a negative value of the first rotation angle αₓ may be associated with a scroll down event. In other words, the system 10 may be configured to associate a negative value of the first rotation angle αₓ to a scroll down event. When the magnetic object 110 as shown in Fig. 3b after having determined a scroll event (e.g. scroll up event), is further moved in the first direction as indicated by the reference arrow for the angular displacement αₓ, the value for the angular displacement αₓ increases from zero (in a positive direction), and another scroll up event is determined when the first rotation angle threshold α_{x,th} is exceeded. Analogously, when the magnetic object 110 as shown in Fig. 3b after having determined a scroll event (e.g. scroll up event), is moved in the second direction opposite to the first direction, the value for the angular displacement αₓ decreases from zero (in a negative direction), and a scroll down event is determined when an absolute value the first rotation angle αₓ exceeds the first rotation angle threshold αₓ, ₜₕ.

Specifically, the system 10 may be configured to output a scroll up step upon determining a scroll up event. The system 10 may be configured to output a scroll down step upon determining a scroll down event. As outlined above, a scroll step may involve control operations depending on the scroll function. For instance, a scroll up event, more specifically a scroll up step, may include moving a selection cursor in a displayed application from one position to an adjacent position in a first direction. Analogously, a scroll down event, more specifically a scroll down step, may include moving a selection cursor in a displayed application from one position to an adjacent position in a second direction, opposite to the first direction.

### Second example arrangement

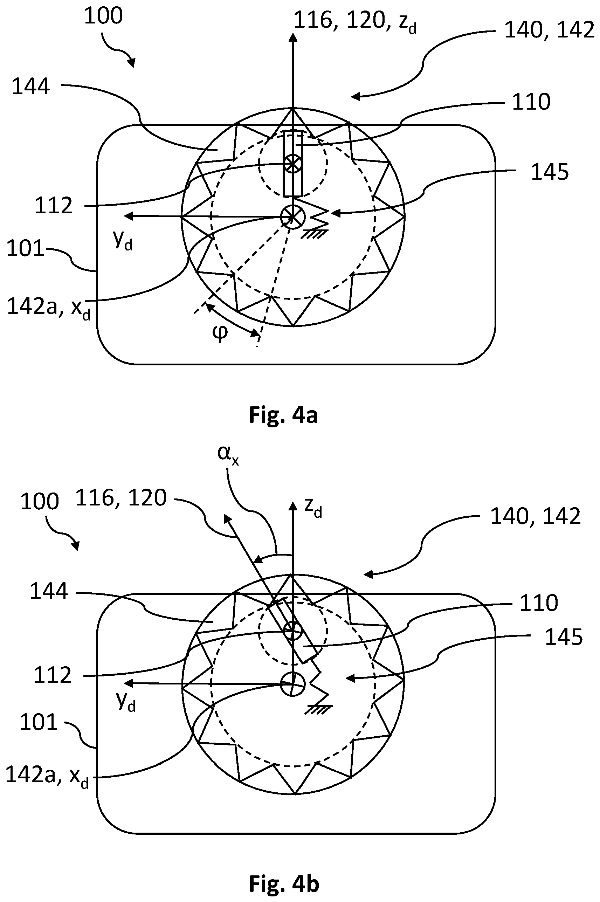

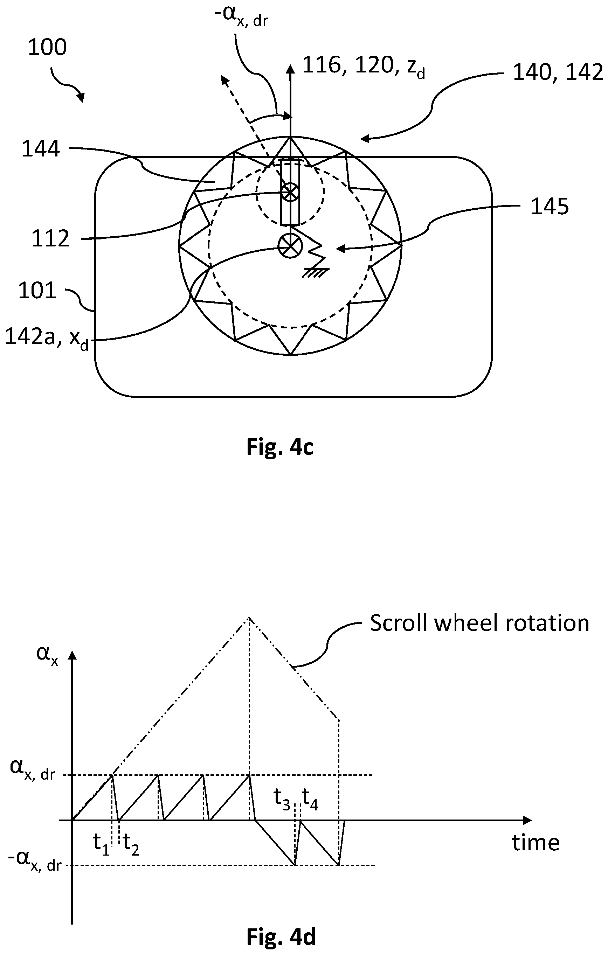

Figs. 4a, 4b, 4c, 4d show a second example arrangement of the user-borne device 100. The second example arrangement is configured according to the first type of scroll displacement. The magnetic object rotation axis 112 is arranged not parallel to the body axis 116. In other words, the magnetic object rotation axis 112 is arranged within the housing 110 inclinedly to the body axis 116. Thereby, a rotation of the at least one magnetic object 110 about the magnetic object rotation axis 112 causes an angular displacement of the body axis 116 between an initial state and a displaced state with respect to the housing 101. The angular displacement between the initial state and the displaced state can be measured along a first rotation angle αₓ about the magnetic object rotation axis 112. In other words, the first rotation angle αₓ is a measure for the angular displacement about the magnetic object rotation axis 112. In embodiments, in the initial state the first rotation angle αₓ may be about zero. The magnetic object rotation axis 112 is associated to the magnetic object 110 which is operationally coupled to the scroll manipulation feature 140. Fig. 4a shows the scroll manipulation feature 140 in an exemplary unactuated position. Fig. 4b show the scroll manipulation feature 140 in an exemplary actuated position. In the unactuated position of the scroll manipulation feature 140, the at least one magnetic object 110 is in an exemplary initial state. In the actuated position of the scroll manipulation feature 140, the at least one magnetic object 110 is in an exemplary displaced state.

In the second example arrangement according to Figs. 4a, 4b, 4c, 4d, the scroll wheel rotation axis 142a of the scroll manipulation feature 140 is parallel to and distanced from the magnetic object rotation axis 112 of the magnetic object 110. However, it should be understood that in variations of the second example arrangement, the scroll wheel rotation axis 142a of the scroll manipulation feature 140 may coincide with the magnetic object rotation axis 112 of the magnetic object 110.

The scroll manipulation feature 140 comprises a scroll wheel 142 which defines the scroll wheel rotation axis 142a. In embodiments, wherein the at least one scroll manipulation feature 140 comprises a scroll wheel 142, the scroll wheel rotation axis 142a may also be referred to as scroll wheel axis 142a. The scroll wheel 142 is arranged and configured to be rotated about the scroll wheel rotation axis 142a with respect to the housing 101 upon actuation of the user U. The magnetic object 110 is coupled to the scroll wheel 142.

Specifically, the scroll wheel 142 comprises a plurality of engagement features 144. The plurality of engagement features 144 are selectively engageable with the at least one magnet 110 to cause the rotation of the at least one magnetic object 110. Selectively coupleable can be understood such that only one respective engagement feature 144 couples with the magnetic object 110 at a time.

In embodiments, the plurality of engagement features 144 may be distributed circumferentially around the scroll wheel axis 142a on the scroll wheel 142, In examples, plurality of engagement features 144 may comprise protrusions which are distributed circumferentially around the scroll wheel axis 142a on the scroll wheel 142. The protrusions may extend radially inwardly and/or axially with respect to the scroll wheel axis 142a. In embodiments, the engagement features 144 may be circumferentially spaced by an angular distance φ. Specifically, the engagement features 144 may be equally circumferentially spaced by the angular distance φ. In the example of Figs. 4a to 4c, the engagement features 144 may be circumferentially spaced by an angular distance φ of about 30°. In other examples, the angular distance φ may be larger or smaller. For instance, the angular distance φ may be between 5° and 120°, specifically between 10° and 45°, and more specifically between 15° and 30°. In the example of Figs. 4a to 4c, the plurality of engagement features 144 comprise twelve engagement features 144. In other examples, the number of engagement features 144 may be larger or smaller than twelve. In examples, the plurality of engagement features 144 may comprise a number of engagement features 144 between three and seventy two, specifically a number of engagement features 144 between five and fifty, and more specifically a number of engagement features 144 between ten and thirty. In embodiments, the engagement features 144 are arranged on a circumference of the scroll wheel 142 radially outside the at least one magnet object 110. In embodiments, the at least one magnetic object 110 may be arranged within an outer periphery of the scroll wheel 142. In embodiments, the at least one magnetic object 110 may be arranged axially adjacently to the scroll wheel 142. With respect to this section, "axially" and "radially" are referred to the scroll wheel axis 142a.

More specifically, upon rotation of the scroll wheel 142 one of the plurality of engagement features 144 is configured to engage the magnetic object 110 and to urge the magnetic object 110 from the initial state to the displaced state (see, Fig. 4b). Additionally, the one of the plurality of engagement features 144 is configured to disengage the at least one magnetic object 110 when the displaced state reaches a trigger position. At the trigger position, the first rotation angle αₓ reaches a predetermined trigger angle. The trigger position, more specifically the predetermined trigger angle, can be understood as a displaced state of the magnetic object 110, more specifically an angular displacement of the body axis 116, with respect to the initial state of the magnetic object 110, more specifically the initial state of the body axis 116. The trigger position, more specifically the predetermined trigger angle, may be dependent on, for instance, one or more of the geometry of the engagement features 144, the number of the engagement features144, the angular distance φ, the geometry of the magnetic object 110, the arrangement of the magnetic object rotation axis 112, and/or the positional arrangement of the magnetic object 110 with respect to the engagement features 144.

Again with reference to Figs. 4a, 4b, 4c the scroll wheel rotation axis 142a of the scroll wheel 142 is arranged orthogonally to the vertical device axis z_{d}. Specifically, the scroll wheel rotation axis 142a of the scroll wheel 142 may be parallel or coinciding with the first device axis x_{d}. This may be particularly advantageous, when the user-borne device 100 is a computer mouse and/or wherein the second device axis y_{d} is pointing in a front direction of the computer mouse. As outlined above, the magnetic object rotation axis 112 is arranged not parallel to and not coinciding with the body axis 116. Furthermore, as shown in Figs. 4a, 4b, 4c the magnetic object 110 may be arranged such that the body axis 116 is not parallel to the scroll wheel rotation axis 142a of the scroll wheel 142. More specifically, the magnetic object 110 is arranged such that the body axis 116 is orthogonally to the scroll wheel rotation axis 142a of the scroll wheel 142. In embodiments, the magnetic object 110 may be arranged such that the body axis 116 is inclined to the scroll wheel rotation axis 142a of the scroll wheel 142. In embodiments, magnetic object 110, specifically the body axis 116, at least in the initial state, may be arranged parallely to the vertical device axis z_{d} or orthogonally to the vertical device axis z_{d}. Specifically, when the body axis 116 is arranged orthogonally to the the vertical device axis z_{d} an orientation of the housing 101 can be detected by the system 10.

Alternatively, to the scroll wheel rotation axis 142a of the scroll wheel 142 being arranged orthogonally to the vertical device axis z_{d}, the scroll wheel rotation axis 142a of the scroll wheel 142 may be arranged parallelly to the vertical device axis z_{d} (not shown). More specifically, the scroll wheel rotation axis 142a of the scroll wheel 142 may coincide with the vertical device axis z_{d}. This may be particularly advantageous, when the user-borne device 100 is a dial and/or wherein the vertical device axis z_{d} is arranged in a geometric center of the dial. The magnetic object 110 may be arranged such that the body axis 116 is not parallel to the scroll wheel rotation axis 142a of the scroll wheel 142. More specifically, the magnetic object 110 is arranged such that the body axis 116 is orthogonally to the scroll wheel rotation axis 142a of the scroll wheel 142. The magnetic object 110 may be arranged such that the body axis 116 is arranged orthogonally the vertical device axis z_{d}. In embodiments, the magnetic object 110 may be arranged such that the body axis 116 is inclined to the scroll wheel rotation axis 142a of the scroll wheel 142 and/or inclined to the vertical device axis z_{d}.

The scroll wheel 142 is rotatable in a first direction about the scroll wheel rotation axis 142a. Furthermore, the scroll wheel 142 is rotatable in a second direction about the scroll wheel rotation axis 142a which is opposite to the first direction about the scroll wheel rotation axis 142a. The magnetic object 110 is coupled to the scroll wheel 142 such that a rotation of the scroll wheel 142 in the first direction about the scroll wheel rotation axis 142a causes a rotation of the magnetic object 110 in a first direction about the magnetic object rotation axis 112. The magnetic object 110 is coupled to the scroll wheel 142 such that a rotation of the scroll wheel 142 in the second direction about the scroll wheel rotation axis 142a causes a rotation of the magnetic object 110 in a second direction about the magnetic object rotation axis 112 opposite to the first direction about the magnetic object rotation axis 112.

In embodiments, the at least one scroll manipulation feature 140 further comprises a biasing mechanism 145. The biasing mechanism 145 may be coupled to the magnetic object 110. The biasing mechanism 145 may be configured to urge, specifically to counterrotate, the magnetic object 110 from the displaced state towards the initial state. For instance, when the one of the plurality of engagement features 144 urges the magnetic object 110, specifically the body axis, to rotate in the first rotation direction about the magnetic object rotation axis 112, the rotation force of the one of the plurality of engagement features 144 which acts on the at least one magnetic object 110 exceeds the biasing force of the biasing mechanism 145 (see, rotation from Fig. 4a to Fig. 4b).

When the displaced stated reaches the trigger position, i.e. when the first rotation angle αₓ reaches a predetermined trigger angle, the one engagement feature 144 disengages the magnetic object 110 and the biasing mechanism 145 urges the magnetic object 110, specifically the body axis 116, to rotate in the second rotation direction about the magnetic object rotation axis 112 (see, rotation from Fig. 4b to Fig. 4c). In other words, when the magnetic object 110 reaches the trigger position in Fig. 4b, the respective engagement feature 144 disengages the magnetic object 110 and the biasing mechanism counterrotates the magnetic object 110 from the displaced state towards the initial state as can be seen in Fig. 4c.

In embodiments, the engagement may be directly with the magnetic object 110 or indirectly via an engagement element. In examples, the engagement element, for instance an extension, be arranged at the magnetic object 110. In embodiments, the scroll manipulation feature 140 may be indirectly coupled to the at least one magnetic object 110. For instance, the scroll manipulation feature 140 may further comprise a transmission device 143. The scroll wheel 142 and/or the plurality of engagement features 144 may be coupled to the magnetic object 110 via the transmission device 143. The transmission device 143 may be configured to magnify a rotation of the magnetic object 110. In embodiments, the transmission device 143 may be configured to minify a rotation of the magnetic object 110. In embodiments, the transmission device 143 may comprise a gear transmission 143a and/or a lever transmission 143b (see, e.g.,

Figs. 6a, 6b, 7).

As outlined above, a rotation of the magnetic object 110 about the magnetic object rotation axis 112 causes an angular displacement αₓ of the body axis 116 between an initial state and a displaced state with respect to the housing 101. The system 10 is configured to detect the angular displacement αₓ of the body axis 116 about the magnetic object rotation axis 112. As further outlined above, the system 10 is configured to determine a scroll event when the tracked movement includes a rotation of the magnetic object 110 about the magnetic object rotation axis 112. Specifically, the system 10 associated with the user-borne device 100 of the second example arrangement may be configured to determine a scroll event when the magnetic object 110 counter rotated from the trigger position towards the initial state.

In embodiments, the system 10 may be configured to determine a scroll event only when an absolute value of the first rotation angle αₓ is reduced by a predetermined drop angle αₓ, _{dr}. The predetermined drop angle αₓ, _{dr} may refer to an angle reduction after the engagement feature 144 disengages the magnetic object 110 when the magnetic object 110 is counter rotated towards the initial state. In other words, the magnetic object may drop or bias back to the initial state. Specifically, the system 10 may be configured to output a scroll step upon determining a scroll event. Just to name a few, a scroll step may involve depending on the scroll function, for instance, one or more of moving a selection cursor from one position to an adjacent position, or moving a displayed element, e.g. a page or a cursor, a step in a direction, or flipping one step through a menu or a selection list.

In embodiments, the predetermined drop angle αₓ, _{dr} may be set to a value between >0° and 15°. Specifically, the predetermined drop angle αₓ, _{dr} may be set to a value between 0.5° and 10°. More specifically, the predetermined drop angle αₓ, _{dr} may be set to a value between 1° and 5°. In some embodiments, the predetermined drop angle αₓ, _{dr} may be set to a value of about 1° +/-0.5°. For instance, the predetermined drop angle αₓ, _{dr} may be set to a value of about 1°. In that regard, Figs. 4c, 4d exemplary show an angular displacement αₓ in the first direction about the magnetic object rotation axis 112 which exceeds a first rotation angle threshold αₓ, ₜₕ. In embodiments, the system 10 may be configured to set the value of the first rotation angle αₓ to zero after determining a scroll event. In other words, after determining a scroll event, the magnetic object 110 is defined to be in the initial state.

In embodiments, the system 10 may be configured to distinguish between a scroll up event and a scroll down event. In examples, the system 10 may be configured to determine that a scroll event is a scroll up event when the body axis 116 is counter rotated in the second direction about the magnetic object rotation axis 112. In examples, the system 10 may be configured to determine that a scroll event is a scroll down event when the body axis 116 is counter rotated in the first direction about the magnetic object rotation axis 112. In more detail, a rotation of the body axis 116 in the first direction about the magnetic object rotation axis 112 may result in a positive value of the first rotation angle αₓ. In other words, the system 10 may be configured to define that a rotation of the body axis 116 in the first direction about the magnetic object rotation axis 112 results in a positive value of the first rotation angle αₓ. In examples, the system 10 may be configured to determine that a scroll event is a scroll up event when the reduction from the absolute value of the first rotation angle αₓ by the predetermined drop angle αₓ, _{dr} results in a smaller relative value of the first rotation angle αₓ. A rotation of the body axis 116 in the second direction about the magnetic object rotation axis 112 may result in a negative value of the first rotation angle αₓ. In other words, the system 10 may be configured to define that a rotation of the body axis 116 in the second direction about the magnetic object rotation axis 112 results in a negative value of the first rotation angle αₓ. In examples, the system 10 may be configured to determine that a scroll event is a scroll down event when the reduction from the absolute value of the first rotation angle αₓ by the predetermined drop angle αₓ, _{dr} results in a larger relative value of the first rotation angle αₓ.

Specifically, the system 10 may be configured to output a scroll up step upon determining a scroll up event. The system 10 may be configured to output a scroll down step upon determining a scroll down event. As outlined above, a scroll step may involve control operations depending on the scroll function. For instance, a scroll up event, more specifically a scroll up step, may include moving a selection cursor in a displayed application from one position to an adjacent position in a first direction. Analogously, a scroll down event, more specifically a scroll down step, may include moving a selection cursor in a displayed application from one position to an adjacent position in a second direction, opposite to the first direction.

In embodiments, the system 10 may be configured to determine a scroll event only when the first rotation angle αₓ is reduced by the predetermined drop angle αₓ, _{dr} within a predetermined drop time. In embodiments, the predetermined drop time may be set between 0ms to 500ms. Specifically, the predetermined drop time may be set between 5ms and 250ms. More specifically, the predetermined drop time may be set between 10ms and 150ms. It is noted that "ms" is to be understood as "milliseconds".

In that regard, Fig. 4d shows a schematic chart of exemplary curve of the first rotation angle αₓ over a time axis. In addition, an exemplary scroll wheel rotation angle associated with the first rotation angle αₓ is depicted. When starting to rotate the scroll wheel 142 in the first direction about the scroll wheel rotation axis 142a, one of the engagement features 144 engages the magnetic object 110 and rotates the magnetic object 110, more specifically the body axis 116, about the magnetic object rotation axis 112 in the first direction. Thereby, the first rotation angle αₓ increases until reaching the trigger position at which the engagement feature 144 disengages the magnetic object 110. This conforms to time sample t1 in the chart of Fig. 4d. Then the biasing mechanism 145 counter rotates the magnetic object 110 towards the initial state within a time interval (t₂ -t₁). In other words, the first rotation angle αₓ is decreased by counter rotating the magnetic object 110. If an absolute value of this decrease of the first rotation angle αₓ exceeds the predetermined drop angle αₓ, _{dr} and if the time interval (t₂ -t₁) is within the predetermined drop time, the system 10 is configured to determine a scroll event. More specifically, as the first rotation angle αₓ is reduced, the system 10 is configured to determine a scroll up event. Then the first rotation angle αₓ may be set to zero. If the scroll wheel 142 is further rotated in the first direction about the scroll wheel rotation axis 142a, the first rotation angle αₓ may again increase from zero until reaching the trigger position. In the exemplary chart of Fig. 4d, three further scroll up events may be determined by the system 10. If the scroll wheel 142 is then rotated in the second direction about the scroll wheel rotation axis 142a, the magnetic object 110, more specifically the body axis 116, may be rotated about the magnetic object rotation axis 112 in the second direction. The system 10 may determine that the first rotation angle αₓ decreases from zero, i.e. may assume a negative value. At time sample t₃, the angular displacement of the magnetic object 110 reaches the trigger position at which the engagement feature 144 disengages the magnetic object 110. Then the biasing mechanism 145 counter rotates the magnetic object 110 towards the initial state within a time interval (t₃ -t₄). In other words, the first rotation angle αₓ is increases by counter rotating the magnetic object 110. If this increase of the first rotation angle αₓ exceeds the predetermined drop angle αₓ, _{dr} and if the time interval (t₃ -t₄) is within the predetermined drop time, the system 10 is configured to determine a scroll event. More specifically, as the first rotation angle αₓ is increased, the system 10 is configured to determine a scroll down event.

### Third example arrangement

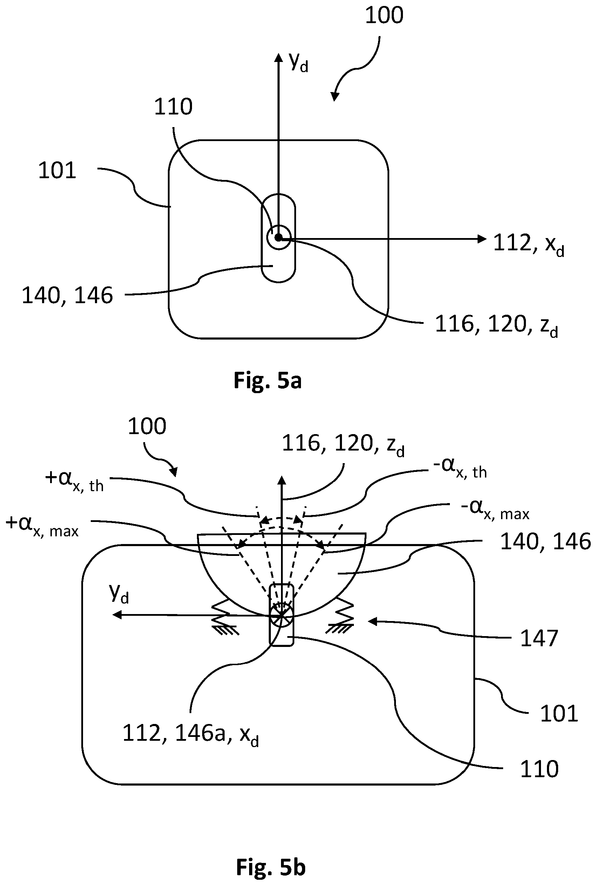

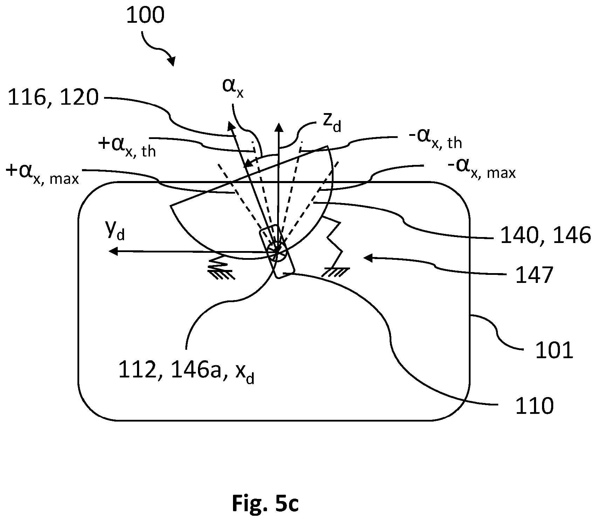

Figs. 5a, 5b, 5c show a third example arrangement of the user-borne device 100. The third example arrangement is configured according to the first type of scroll displacement. The magnetic object rotation axis 112 is arranged not parallel to the body axis 116. In other words, the magnetic object rotation axis 112 is arranged within the housing 110 inclinedly to the body axis 116. Thereby, a rotation of the at least one magnetic object 110 about the magnetic object rotation axis 112 causes an angular displacement of the body axis 116 between an initial state and a displaced state with respect to the housing 101. The angular displacement between the initial state and the displaced state can be measured along a first rotation angle αₓ about the magnetic object rotation axis 112. In other words, the first rotation angle αₓ is a measure for the angular displacement about the magnetic object rotation axis 112. In embodiments, in the initial state the first rotation angle αₓ may be about zero. The magnetic object rotation axis 112 is associated to the magnetic object 110 which is operationally coupled to the scroll manipulation feature 140. Figs. 5a, 5b show the scroll manipulation feature 140 in an exemplary unactuated position. Fig. 5c show the scroll manipulation feature 140 in an exemplary actuated position. In the unactuated position of the scroll manipulation feature 140, the at least one magnetic object 110 is in an exemplary initial state. In the actuated position of the scroll manipulation feature 140, the at least one magnetic object 110 is in an exemplary displaced state.

In the third example arrangement according to Figs. 5a, 5b, 5c, the tiltable button rotation axis 146a of the scroll manipulation feature 140 may coincide with the magnetic object rotation axis 112 of the magnetic object 110. However, it should be understood that in variations of the third example arrangement, the tiltable button rotation axis 146a of the scroll manipulation feature 140 may be distanced from and/or parallel to the magnetic object rotation axis 112 of the magnetic object 110.

The scroll manipulation feature 140 comprises a tiltable button 146 which defines the tiltable button rotation axis 146a. In embodiments, wherein the at least one scroll manipulation feature 140 comprises a tiltable button 146, the tiltable button rotation axis 146a may also be referred to as tilt button axis 146a. The tiltable button 146 is configured and arranged to be tilted about the tiltable button rotation axis 146a with respect to the housing 101 upon actuation of a user U. Specifically, the tiltable button 146 is configured and arranged to be tilted about the tiltable button rotation axis 146a with respect to the housing 101 between a neutral position and a maximally tilted position. Tilting may be understood as a sub-form of rotation. The magnetic object 110 is coupled to the tiltable button 146. In the neutral position of the tiltable button 146 the at least one magnetic object 110 may be in the initial state (see, Figs. 5a, 5b). In the maximally tilted position of the tiltable button 146 the at least one magnetic object 110 may be in a maximally displaced state (see, Fig. 5c). In other words, in the maximally tilted position of the tiltable button 146 the body axis 116 is maximally angularly displaced by αₓ, _{may}. In embodiments, the at least one scroll manipulation feature 140 may comprise a biasing mechanism 147. The biasing mechanism 147 may be coupled to the tiltable button 146 and configured to tiltable bias the tiltable button 146 towards the neutral position. As shown in Figs. 5b and 5c the biasing mechanism 147 comprises two spring elements. In embodiments, the biasing mechanism 147 may comprise least a spring element (e.g. a coil spring) and/or at least a flat spring beams.

Specifically, the at least one magnetic object 110 may be directly coupled to the tiltable button 146. For instance, the magnetic object 110 may be attached in and/or to a center of the tiltable button rotation axis 146a (see, e.g., Figs. 5a, 5b, 5c). In aspects, the term "coupled" can be understood as "operationally coupled", e.g. such that a movement of the scroll manipulation feature 140 effects a movement of the at least one magnetic object 110. Directly coupled may be understood such that rotation of the scroll wheel 142 by one degree may result in a rotation of the body axis 116 by one degree.

Alternatively, to being directly coupled, the scroll manipulation feature 140 may be indirectly coupled to the at least one magnetic object 110. For instance, the scroll manipulation feature 140 may further comprise a transmission device 143. The tiltable button 146 may be coupled to the magnetic object 110 via the transmission device 143. The transmission device 143 may be configured to magnify a rotation of the magnetic object 110. Alternatively, the transmission device 143 may be configured to minify a rotation of the magnetic object 110. In embodiments, the transmission device 143 may comprise a gear transmission 143a and/or a lever transmission 143b (see, e.g., Figs. 6a, 6b, 7).

Again with reference to Figs. 5a, 5b, 5c, the tiltable button rotation axis 146a of the tiltable button 146 is arranged orthogonally to the vertical device axis z_{d}. Specifically, the tiltable button rotation axis 146a of the scroll wheel 142 may be parallel or coinciding with the first device axis x_{d}. This may be particularly advantageous, when the user-borne device 100 is a computer mouse and/or wherein the second device axis y_{d} is pointing in a front direction of the computer mouse. As outlined above, the magnetic object rotation axis 112 is arranged not parallel to and not coinciding with the body axis 116. Furthermore, as shown in Figs. 5a, 5b, 5c the magnetic object 110 may be arranged such that the body axis 116 is not parallel to the tiltable button rotation axis 146a of the tiltable button 146. More specifically, the magnetic object 110 is arranged such that the body axis 116 is orthogonally to the tiltable button rotation axis 146a of the tiltable button 146. Alternatively, the magnetic object 110 may be arranged such that the body axis 116 is inclined to the tiltable button rotation axis 146a of the tiltable button 146.

Alternatively, to the tiltable button rotation axis 146a of the tiltable button 146 being arranged orthogonally to the vertical device axis z_{d}, the tiltable button rotation axis 146a of the tiltable button 146 may be arranged parallelly to the vertical device axis z_{d} (not shown). More specifically, the tiltable button rotation axis 146a of the tiltable button 146 may coincide with the vertical device axis z_{d}. This may be particularly advantageous, when the user-borne device 100 is a dial and/or wherein the vertical device axis z_{d} is arranged in a geometric center of the dial. The magnetic object 110 may be arranged such that the body axis 116 is not parallel to the tiltable button rotation axis 146a of the tiltable button 146. More specifically, the magnetic object 110 may be arranged such that the body axis 116 is orthogonally to the tiltable button rotation axis 146a of the tiltable button 146. The magnetic object 110 may be arranged such that the body axis 116 is arranged orthogonally the vertical device axis z_{d}. Alternatively, the magnetic object 110 may be arranged such that the body axis 116 is inclined to the tiltable button rotation axis 146a of the tiltable button 146 and/or inclined to the vertical device axis z_{d}.

As schematically illustrated in Fig. 5b, the tiltable button 146 is rotatable in a first direction about the tiltable button rotation axis 146a. Furthermore, the tiltable button 146 is rotatable in a second direction about the tiltable button rotation axis 146a which is opposite to the first direction about the tiltable button rotation axis 146a. The magnetic object 110 is coupled to the tiltable button 146 such that a rotation of the tiltable button 146 in the first direction about the tiltable button rotation axis 146a causes a rotation of the magnetic object 110 in a first direction about the magnetic object rotation axis 112. The magnetic object 110 is coupled to the tiltable button 146 such that a rotation of the tiltable button 146 in the second direction about the tiltable button rotation axis 146a causes a rotation of the magnetic object 110 in a second direction about the magnetic object rotation axis 112 opposite to the first direction about the magnetic object rotation axis 112.

As outlined above, a rotation of the magnetic object 110 about the magnetic object rotation axis 112 causes an angular displacement αₓ of the body axis 116 between an initial state and a displaced state with respect to the housing 101. The system 10 is configured to detect the angular displacement αₓ of the body axis 116 about the magnetic object rotation axis 112. As further outlined above, the system 10 is configured to determine a scroll event when the tracked movement includes a rotation of the magnetic object 110 about the magnetic object rotation axis 112. The system 10 may be further configured to determine a scroll event only when an absolute value the first rotation angle αₓ exceeds a first rotation angle threshold αₓ, ₜₕ.

In embodiments, the first rotation angle threshold αₓ, ₜₕ may be set to a value between >0° and 15°. Specifically, the first rotation angle threshold αₓ, ₜₕ may be set to a value between 0.5° and 10°. More specifically, the first rotation angle threshold αₓ, ₜₕ may be set to a value between 1° and 5°. In some embodiments, the first rotation angle threshold αₓ, ₜₕ may be set to a value of about 1° +/- 0.5°. For instance, the first rotation angle threshold αₓ, ₜₕ may be set to a value of about 1°. In that regard, Figs. 3a, 3b exemplary shows an angular displacement αₓ in the first direction about the magnetic object rotation axis 112 which exceeds a first rotation angle threshold αₓ, ₜₕ. In embodiments, the system 10 may be configured to set the value of the first rotation angle αₓ to zero after in the neutral position of the tiltable button 146.

Specifically, the system 10 associated with the user-borne device 100 of the third example arrangement may be configured to output an initiation of a scroll movement upon determining a scroll event. The system 10 may be further configured to output a discontinuation of the scroll movement upon determining that the absolute value of the first rotation angle (αₓ) falls below a predetermined stop value. In embodiments, the predetermined stop value is equal or lower than the first rotation angle threshold αₓ, ₜₕ. A scroll movement may be understood as constantly performing a scroll function at a predetermined velocity, for instance moving a displayed e.g. a page or a cursor, in a direction at the predetermined velocity. In embodiments, a scroll movement may be understood as repetitively outputting scroll steps, for instance one scroll step at a predetermined time interval.

In embodiments, the system 10 may be configured to output an acceleration of the scroll movement when the absolute value of the first rotation angle αₓ increases. In other words, the predetermined velocity of the scroll movement may be increased to a current velocity by a factor which is related to the increment of the first rotation angle αₓ. The system 10 may be configured to output a deceleration of the scroll movement when the absolute value of the first rotation angle αₓ decreases. Analogously, the current velocity of the scroll movement may be decreased by a factor which is related to the decrement of the first rotation angle αₓ. When the scroll movement comprises repetitively outputting scroll steps an acceleration may result in increasing the number of scroll steps outputted per time interval and/or reducing the time interval per which a number of scroll steps is outputted. Analogously, a acceleration may result in decreasing the number of scroll steps outputted per time interval and/or increasing the time interval per which a number of scroll steps is outputted.

**In** embodiments, the system 10 may be configured to distinguish between a scroll up event and a scroll down event. **In** examples, the system 10 may be configured to determine that a scroll event is a scroll up event when the body axis 116 is angularly displaced from the initial state in the first direction about the magnetic object rotation axis 112 to the displaced state. **In** examples, the system 10 may be configured to determine that a scroll event is a scroll down event when the body axis 116 is angularly displaced from the initial state in the second direction about the magnetic object rotation axis 112 to the displaced state. **In** more detail, a rotation of the body axis 116 in the first direction about the magnetic object rotation axis 112 may result in a positive value of the first rotation angle αₓ. In other words, the system 10 may be configured to define that a rotation of the body axis 116 in the first direction about the magnetic object rotation axis 112 results in a positive value of the first rotation angle αₓ. In examples, a positive value of the first rotation angle αₓ may be associated with a scroll up event. In other words, the system 10 may be configured to associate a positive value of the first rotation angle αₓ to a scroll up event. A rotation of the body axis 116 in the second direction about the magnetic object rotation axis 112 may result in a negative value of the first rotation angle αₓ. In other words, the system 10 may be configured to define that a rotation of the body axis 116 in the second direction about the magnetic object rotation axis 112 results in a negative value of the first rotation angle αₓ. In examples, a negative value of the first rotation angle αₓ may be associated with a scroll down event. In other words, the system 10 may be configured to associate a negative value of the first rotation angle αₓ to a scroll down event. For instance, when the magnetic object 110 is rotated in the first direction about the magnetic object rotation axis 112 above the first rotation angle threshold αₓ, ₜₕ as shown in Fig. 5c, a scroll up event is determined.

Specifically, the system 10 may be configured to output a scroll up movement upon determining a scroll up event. The system 10 may be configured to output a scroll down movement upon determining a scroll down event. As outlined above, a scroll movement may involve control operations depending on the scroll function. For instance, a scroll up event, more specifically a scroll up movement, may include moving a selection cursor in a displayed application in a first direction at the predetermined velocity or current velocity. Analogously, a scroll down event, more specifically a scroll down movement, may include moving a selection cursor in a displayed application in a second direction which is opposite to the first direction at the predetermined velocity or current velocity.

### Fourth example arrangement

Figs. 14a, 14b show a fourth example arrangement of the user-borne device 100. The fourth example arrangement is configured according to the second type of scroll displacement. The magnetic object rotation axis 112 is arranged parallel to and not coinciding with the body axis 116 (see, Figs. 14). In other words, the magnetic object rotation axis 112 is arranged within the housing 110 parallel the body axis 116. Thereby, a rotation of the at least one magnetic object 110 about the magnetic object rotation axis 112 causes translational displacement d of the body axis 116 between an initial state and a displaced state with respect to the housing 101. In other words, the translational displacement d is a measure for a movement of the magnetic object 110 orthogonally to the body axis 116 from the initial state to the displaced state with respect to the housing 101. The magnetic object rotation axis 112 is associated to the magnetic object 110 which is operationally coupled to the scroll manipulation feature 140.

In the fourth example arrangement according to Figs. 14a, 14b, the scroll wheel rotation axis 142a of the scroll manipulation feature 140 may coincide with the magnetic object rotation axis 112 of the magnetic object 110. The magnetic object 110 may be arranged such that the body axis 116 is parallel to the scroll wheel rotation axis 142a of the at least one scroll manipulation feature 140. More specifically, the magnetic object 110 may be arranged such that the body axis 116 distanced from the scroll wheel rotation axis 142a of the at least one scroll manipulation feature 140. Alternatively described, the magnetic object 110 may be arranged such that the body axis 116 is parallel to and distanced from the magnetic object rotation axis 112.

As shown in Figs. 14a, 14b, the scroll manipulation feature 140 may comprise a scroll wheel 142 which defines the scroll wheel rotation axis 142a. In embodiments, wherein the at least one scroll manipulation feature 140 comprises a scroll wheel 142, the scroll wheel rotation axis 142a may also be referred to as scroll wheel axis 142a. The scroll wheel 142 may be arranged and configured to be rotated about the scroll wheel rotation axis 142a with respect to the housing 101 upon actuation of the user U.

The magnetic object 110 is coupled to the scroll wheel 142. Specifically, the magnetic object 110 is directly coupled to the scroll wheel 142. In embodiments, the magnetic object 110 may be attached to the scroll wheel 142 radially distanced from the scroll wheel axis 142a. In embodiments, the at least one magnetic object 110 may be attached at or close to an inner circumferential surface of the scroll wheel 142. In aspects, the term "coupled" can be understood as "operationally coupled", e.g. such that a movement of the scroll manipulation feature 140 effects a movement of the at least one magnetic object 110. Directly coupled may be understood with respect to the fourth example arrangement such that the magnetic object 110 is fixedly attached to the scroll wheel 142.

As schematically illustrated in Figs. 14a, 14b, the scroll wheel 142 is rotatable in a first direction about the scroll wheel rotation axis 142a. Furthermore, the scroll wheel 142 is rotatable in a second direction about the scroll wheel rotation axis 142a which is opposite to the first direction about the scroll wheel rotation axis 142a. The magnetic object 110 is coupled to the scroll wheel 142 such that a rotation of the scroll wheel 142 in the first direction about the scroll wheel rotation axis 142a causes a rotation of the magnetic object 110 in a first direction about the magnetic object rotation axis 112. The magnetic object 110 is coupled to the scroll wheel 142 such that a rotation of the scroll wheel 142 in the second direction about the scroll wheel rotation axis 142a causes a rotation of the magnetic object 110 in a second direction about the magnetic object rotation axis 112 opposite to the first direction about the magnetic object rotation axis 112.

Again with reference to Figs. 14a, 14b, the scroll wheel rotation axis 142a of the scroll wheel 142 is arranged orthogonally to the vertical device axis z_{d}. Specifically, the scroll wheel rotation axis 142a of the scroll wheel 142 may be parallel to or coinciding with the first device axis x_{q}. This may be particularly advantageous, when the user-borne device 100 is a computer mouse and/or wherein the second device axis y_{d} is pointing in a front direction of the computer mouse. As outlined above, the magnetic object rotation axis 112 is arranged parallel to and not coinciding with the body axis 116. Furthermore, as shown in Figs. 14a, 14b the magnetic object 110 may be arranged such that the body axis 116 is parallel to the scroll wheel rotation axis 142a of the scroll wheel 142. Alternatively, the magnetic object 110 may be arranged such that the body axis 116 is inclined to the scroll wheel rotation axis 142a of the scroll wheel 142, specifically, as long as the body of the magnetic object 110 is distanced from the magnetic object rotation axis 112.

As outlined above, a rotation of the magnetic object 110 about the magnetic object rotation axis 112 causes a translational displacement d of the body axis 116 between an initial state and a displaced state with respect to the housing 101. As further outlined above, the system 10 is configured to determine a scroll event when the tracked movement includes a rotation of the magnetic object 110 about the magnetic object rotation axis 112. Specifically, the system 10 associated with the user-borne device 100 of the fourth example arrangement is configured to detect the translational displacement d of the body axis 116 when the magnetic object 110 is rotated about the magnetic object rotation axis 112. The system 10 may be further configured to determine a scroll event only when the translational displacement d exceeds a predetermined threshold distance. In examples, the predetermined threshold distance may include an absolute moving distance of the body axis 116 between the initial state and the displaced state in the reference coordinate system XYZ defined by the plurality of magnetometers 300. In embodiments, the system 10 may be configured to determine a scroll event only when the translational displacement d includes a circle movement, i.e. a translation along a circular path. The circular path may be include in a plane orthogonal to the body axis 116. Specifically, the system 10 may be configured to output a scroll step upon determining a scroll event. Just to name a few, a scroll step may involve depending on the scroll function, for instance, one or more of moving a selection cursor from one position to an adjacent position, or moving a displayed element, e.g. a page or a cursor, a step in a direction, or flipping one step through a menu or a selection list.

In embodiments, the system 10 may be configured to determine a scroll event only when the translational displacement d between the initial state and the displaced state comprises, specifically consists of, predetermined values of translations along the first device axis x_{d} and/or the second device axis y_{d} and/or the vertical device axis z_{d}.

The system 10 may be configured to determine that a scroll event is a scroll up event or a scroll down event based on the predetermined values of translations along the first device axis x_{d} and/or the second device axis y_{d} and/or the vertical device axis z_{d}. The system 10 may be configured to set a value of the translational displacement d to zero upon detecting a scroll event. Specifically, the system 10 may be configured to output a scroll up step upon determining a scroll up event. The system 10 may be configured to output a scroll down step upon determining a scroll down event. As outlined above, a scroll step may involve control operations depending on the scroll function. For instance, a scroll up event, more specifically a scroll up step, may include moving a selection cursor in a displayed application from one position to an adjacent position in a first direction. Analogously, a scroll down event, more specifically a scroll down step, may include moving a selection cursor in a displayed application from one position to an adjacent position in a second direction, opposite to the first direction.

In variations of the fourth example arrangement, the scroll wheel 142 may be configured similarly as that of the third example arrangement. Specifically, the scroll wheel 142 may comprise a plurality of engagement features 144. The plurality of engagement features 144 are selectively engageable with the at least one magnet 110 to cause the rotation of the at least one magnetic object 110. Selectively coupleable can be understood such that only one respective engagement feature 144 couples with the magnetic object 110 at a time. In embodiments, the plurality of engagement features 144 may be distributed circumferentially around the scroll wheel axis 142a on the scroll wheel 142, In examples, plurality of engagement features 144 may comprise protrusions which are distributed circumferentially around the scroll wheel axis 142a on the scroll wheel 142. The protrusions may extend radially inwardly and/or axially with respect to the scroll wheel axis 142a. In embodiments, the engagement features 144 may be circumferentially spaced by an angular distance φ. Specifically, the engagement features 144 may be equally circumferentially spaced by the angular distance φ. The engagement features 144 may be circumferentially spaced by an angular distance φ of about 30°. In other examples, the angular distance φ may be larger or smaller. For instance, the angular distance φ may be between 5° and 120°, specifically between 10° and 45°, and more specifically between 15° and 30°. The plurality of engagement features 144 may comprise twelve engagement features 144. In other examples, the number of engagement features 144 may be larger or smaller than twelve. In examples, the plurality of engagement features 144 may comprise a number of engagement features 144 between three and seventy two, specifically a number of engagement features 144 between five and fifty, and more specifically a number of engagement features 144 between ten and thirty. In embodiments, the engagement features 144 are arranged on a circumference of the scroll wheel 142 radially outside the at least one magnet object 110. In embodiments, the at least one magnetic object 110 may be arranged within an outer periphery of the scroll wheel 142. In embodiments, the at least one magnetic object 110 may be arranged axially adjacently to the scroll wheel 142. With respect to this section, "axially" and "radially" are referred to the scroll wheel axis 142a. More specifically, upon rotation of the scroll wheel 142 one of the plurality of engagement features 144 is configured to engage the magnetic object 110 and to urge the magnetic object 110 from the initial state to the displaced state. Additionally, the one of the plurality of engagement features 144 is configured to disengage the at least one magnetic object 110 when the displaced state reaches a trigger position. At the trigger position, the translational displacement d reaches a predetermined trigger distance. The trigger position, more specifically the predetermined trigger distance, can be understood as a displaced state of the magnetic object 110, more specifically a translational displacement of the body axis 116, with respect to the initial state of the magnetic object 110, more specifically the initial state of the body axis 116. The trigger position, more specifically the predetermined trigger distance, may be dependent on, for instance, one or more of the geometry of the engagement features 144, the number of the engagement features144, the angular distance φ, the geometry of the magnetic object 110, the arrangement of the magnetic object rotation axis 112, the circular path along which the magnetic object 110 can travel around the magnetic object rotation axis 112 and/or the positional arrangement of the magnetic object 110 with respect to the engagement features 144.

The fifth to the eight example arrangements according to Figs. 1, 8a, 8b, 9a, 9b, 10a, 10b, 11a, 11b, 12a, 12b, 12c, 13a, 13b relate to embodiments which include a click manipulation feature 150. These embodiments which include a click manipulation feature 150 are combinable with one or more aspects of any of the previously described example arrangements describing the scroll manipulation feature 140. Before describing specific details of the respective example arrangements, common features are first described:

As shown in Figs. 1, 8a, 8b, 9a, 9b, 10a, 10b, 11a, 11b, 12a, 12b, 12c, 13a, 13b, the user-borne device 100 may further comprises at least one click manipulation feature 150, 150a, 150b movably coupled to the housing 101 and actuatable by a user U. The at least one magnetic object 110, 110a, 110b, 110c may be operationally coupled to the at least one click manipulation feature 150, 150a, 150b. In some embodiments, the magnetic object 110, 110a, 110b, 110c which is operationally coupled to the at least one click manipulation feature 150, 150a, 150b may be the same magnetic object 110, 110a, 110b, 110c which is coupled to the scroll manipulation feature 140 or an additional magnetic object 110, 110a, 110b, 110c. The at least one magnetic object 110, 110a, 110b, 110c is operationally coupled to the at least one click manipulation feature 150, 150a, 150b such that an actuation of the at least one click manipulation feature 150, 150a, 150b causes a rotation and/or translation of the at least one magnetic object 110, 110a, 110b, 110c with respect to the housing 101.

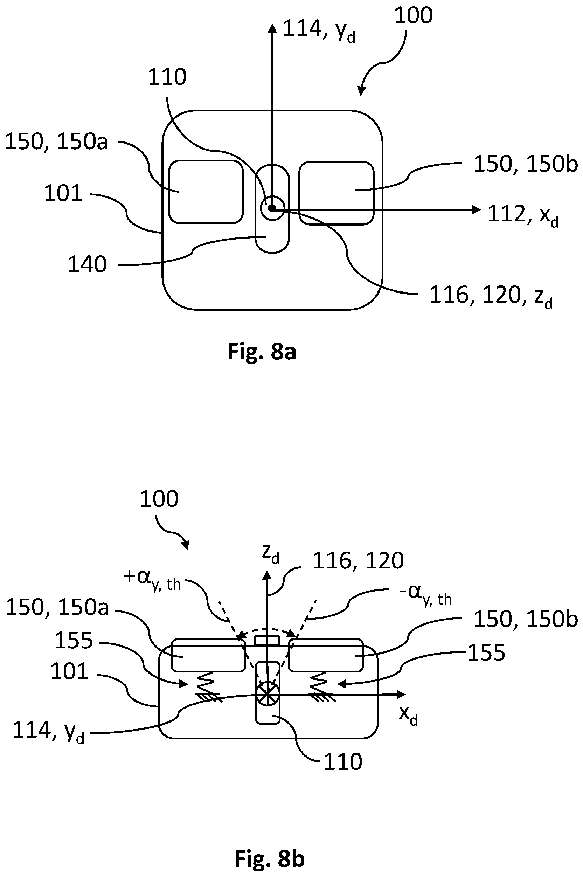

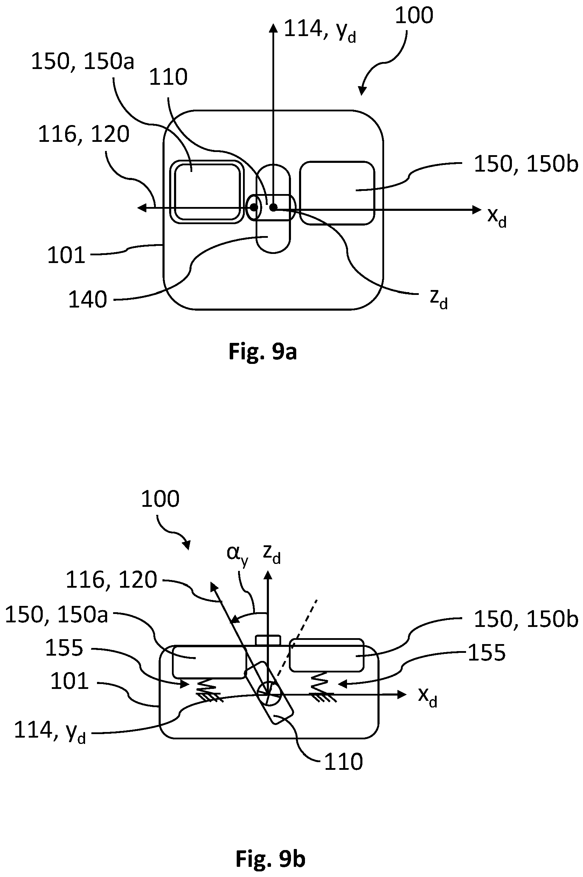

In embodiments, the at least one click manipulation feature 150, 150a, 150b may be arranged movably with respect to the housing 101 between a neutral position, and at least one of a first actuated position and a second actuated position. The at least one click manipulation feature 150, 150a, 150b may comprise a biasing mechanism 155. The biasing mechanism 155 may be configured to bias the at least one click manipulation feature 150, 150a, 150b towards the neutral position. In embodiments, the biasing mechanism 155 may comprise at least one spring element, e.g. two spring elements as shown in Figs. 8b and 9b. In embodiments, the biasing mechanism 155 may comprise a feedback element. The feedback element may be configured to provide audible and/or tactile feedback to the user U. In embodiments, the feedback element may be configured to provide audible and/or tactile feedback when the first actuated position and/or the second actuated position is reached. In embodiments, the feedback element may comprise a clicker.

In embodiments, the at least one magnetic object 110, 110a, 110b, 110c may be coupled to the at least one click manipulation feature 150, 150a, 150b. Specifically the at least one magnetic object 110, 110a, 110b, 110c may be directly coupled to the at least one click manipulation feature 150, 150a, 150b.

Specifically, the at least one magnetic object 110, 110a, 110b, 110c may be directly coupled to the scroll wheel 142. For instance, the magnetic object 110 may be attached in and/or to a center of the scroll wheel 142 (see, e.g., Fig. 2a). In aspects, the term "coupled" can be understood as "operationally coupled", e.g. such that a movement of the at least one click manipulation feature 150, 150a, 150b effects a movement of the at least one magnetic object 110, 110a, 110b, 110c.

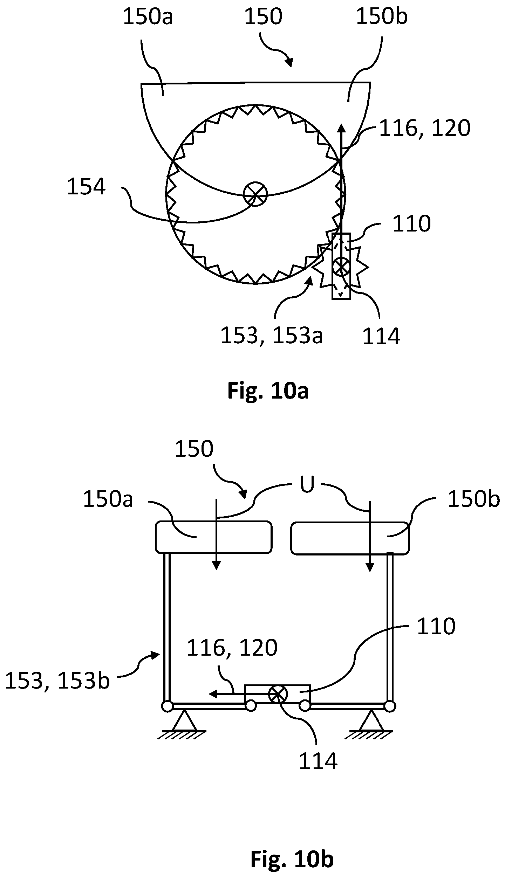

Alternatively, to being directly coupled, the at least one click manipulation feature 150, 150a, 150b may be indirectly coupled to the at least one magnetic object 110, 110a, 110b, 110c. For instance, the at least one click manipulation feature 150, 150a, 150b may further comprise a transmission device 153. The at least one click manipulation feature 150, 150a, 150b may be coupled to the at least one magnetic object 110, 110a, 110b, 110c via the transmission device 153. The transmission device 153 may be configured to magnify a rotation and/or translation of the at least one magnetic object 110, 110a, 110b, 110c. Alternatively, the transmission device 153 may be configured to minify a rotation and/or translation of the at least one magnetic object 110, 110a, 110b, 110c. In embodiments, the transmission device 153 may comprise a gear transmission 153a and/or a lever transmission 153b (see, e.g., Figs. 10a, 10b). In embodiments with a gear transmission, the at least one click manipulation feature 150, 150a, 150b may coupled to a driving gear which may be rotatable about a driving gear axis 154, such that an actuation of the at least one click manipulation feature 150 causes a rotation of the driving gear which in turn causes a rotation of a driven gear coupled to the at least one magnetic object 110.

### Fifth example arrangement

Figs. 8a, 8b, 9a, 9b show a fifth example arrangement, wherein the user-borne device 100 includes a click manipulation feature 150 which includes two manipulation surfaces 150a, 150b, specifically a first manipulation surface 150a and a second manipulation surface 150b. Alternatively, two separate click manipulation features 150 may be provided which provide a first manipulation surface 150a and a second manipulation surface 150b and which are actuatable by a user U. Actuating the click manipulation feature 150 via the first manipulation surface 150a moves the click manipulation feature 150 from the neutral position to the first actuated position (see, Figs. 9a, 9b). Actuating the click manipulation feature 150 via the second manipulation surface 150b moves the click manipulation feature 150 from the neutral position to the second actuated position (not shown).

In the fifth example arrangement, the same magnetic object 110 which is operationally coupled to the scroll manipulation feature 140 is coupled to the click manipulation feature 150. The magnetic object 110 is operationally coupled to the click manipulation feature 150, 150a, 150b such that an actuation of the at least one click manipulation feature 150 causes a rotation of the magnetic object 110 about a second rotation axis 114 with respect to the housing 101. The second rotation axis 114 is orthogonally to the magnetic object rotation axis 112. Additionally, the second rotation axis 114 may not coincide with the body axis 116. Furthermore, the second rotation axis 114 may not be parallel to the body axis 116 such that a rotation of the magnetic object 110 about the second rotation axis 114 causes an angular displacement of the body axis 116 from an initial state to a displaced state along a second rotation angle α_{y} with respect to the housing 101. The expression "not coincide" may be understood as being not identical. In embodiments, the second rotation axis 114 may intersect with the body axis 116. In other words, the second rotation angle α_{y} is a measure for the angular displacement of the magnetic object 110, specifically the body axis 116, about the second rotation axis 114. In embodiments, the body axis 116 may be orthogonally to the second rotation axis 114. In embodiments, the second rotation axis 114 may intersect with the body axis 116, specifically the second rotation axis 114 may intersect with the center of mass of the magnetic object 110.

The magnetic object 110 may be coupled to the click manipulation feature 150, 150a, 150b such that the magnetic object 110 is in the initial state when the click manipulation feature 150, 150a, 150b is in the neutral position. In other words, the value of the second rotation angle α_{y} may be defined as zero when the click manipulation feature150, 150a, 150b is in the neutral position. Specifically, the system is configured to define a value of the second rotation angle α_{y} to be zero when the click manipulation feature150, 150a, 150b is in the neutral position.

In embodiments, a movement of the click manipulation feature 150, 150a towards the first actuated position causes a rotation of the magnetic object 110 in a first direction about the second rotation axis 114 (see, Figs, 9a, 9b), A movement of the click manipulation feature 150, 150b towards the second actuated position causes a rotation of the magnetic object 110 in a second direction about the second rotation axis 114 opposite to the first direction about the second rotation axis 114. In embodiments, the at least one click manipulation feature 150 may comprise a first click manipulation feature 150a, e.g. left click button, which is actuatable from the neutral position to the first actuated position, e.g. left click. The first click manipulation feature 150a may cause the at least one magnetic object 110 to rotate about the second rotation axis 114 in the first direction. In embodiments, the at least one click manipulation feature 150 may comprise a second click manipulation feature 150b, e.g. right click button, which is actuatable from the neutral position to the second actuated position, e.g. right click. The second click manipulation feature 150b may cause the at least one magnetic object 110 to rotate about the second rotation axis 114 in the second direction, opposite to the first direction.

In embodiments, the system 10 may be configured to detect the angular displacement of the body axis 116 about the second rotation axis 114. The system 10 may be configured to determine a click event when the tracked movement includes a rotation of the magnetic object 110 about the second rotation axis 114. As outlined above, a click event may include a selection of an object, e.g., a selection of an item, a selection of a list, a selection of an item on a list. A click event may trigger a following action. A click event may trigger a clicking action, a selecting action, a dragging action and/or a dragging-and-dropping action of an item, object or a word. A click event may further trigger an action which provides additional information and/or properties of an object, item or word selected.

The system 10 may be configured to determine a click event only when an absolute value of the second rotation angle α_{y} exceeds a second rotation angle threshold a_{y}, ₜₕ. In embodiments, the second rotation angle threshold a_{y}, ₜₕ may be set to a value between >0° and 15°. Specifically, the second rotation angle threshold a_{y}, ₜₕ may be set to a value between 0.5° and 10°. More specifically, the second rotation angle threshold a_{y}, ₜₕ may be set to a value between 1° and 5°.For instance, the second rotation angle threshold a_{y}, ₜₕ may be set to a value of about 1° +/-0.5°.

In embodiments, the system 10 may be configured to distinguish between a first click function and a second click function. In examples, the system 10 may be configured to determine that a click event is a first click function when the body axis 116 is angularly displaced from the initial state in the first direction about the second rotation axis 114 to the displaced state. In examples, the system 10 may be configured to determine that a click event is a second click function when the body axis 116 is angularly displaced from the initial state in the second direction about the second rotation axis 114 to the displaced state. In more detail, a rotation of the body axis 116 in the first direction about the second rotation axis 114 may result in a positive value of the second rotation angle α_{y}. In other words, the system 10 may be configured to define that a rotation of the body axis 116 in the first direction about the second rotation axis 114 results in a positive value of the second rotation angle α_{y}. In examples, a positive value of the second rotation angle α_{y} may be associated with a first click function. In other words, the system 10 may be configured to associate a positive value of the second rotation angle α_{y} to a first click function. A rotation of the body axis 116 in the second direction about the first second axis 114 may result in a negative value of the second rotation angle α_{y}. In other words, the system 10 may be configured to define that a rotation of the body axis 116 in the second direction about the second rotation axis 114 results in a negative value of the second rotation angle α_{y}. In examples, a negative value of the second rotation angle α_{y} may be associated with a second click function. In other words, the system 10 may be configured to associate a negative value of the second rotation angle α_{y} to a second click function. In embodiments, the first click function, and the second click function may be associated with different functionalities of a click event. In embodiments, the system 10 may be configured to set the value of the second rotation angle α_{y} to zero in the neutral position at least one click manipulation feature 150, 150a, 150b.

### Sixth example arrangement

Figs. 11a, 11b show a sixth example arrangement of the user-borne device 100. In comparison to the fifth example arrangement, the user-borne device 100 comprises two magnetic objects 110a, 110b. The two magnetic objects 110a, 110b include a first magnetic object 110, 110a defining a first magnetic moment vector 120a along a first body axis 116a and a second magnetic object 110, 110b defining a second magnetic moment vector 120b along a second body axis 116b. The first magnetic object 110a and the second magnetic object 110b are arranged distanced from each other in the housing 101 of the user-borne device 100. In embodiments, the first magnetic object 110a and the second magnetic object 110b may be arranged at different orientations in the housing 101 of the user-borne device 100. By the provision of a second magnetic object, the reliability of the user-borne device 100 and associated system 10 may be increased. Furthermore, a risk of misinterpreting a rotation of the housing 101 as a click or scroll event may be prevented or at least reduced.

In embodiments, the first magnetic object 110a may comprise a body, specifically a longitudinal body, extending along the first body axis 116a. The first body axis 116a may define the first magnetic moment vector 120a of the first magnetic object 110a. The second magnetic object 110b may comprise a body, specifically a longitudinal body, extending along the second body axis 116b. The second body axis 116b may define the second magnetic moment vector 120b of the second magnetic object 110b.

In embodiments, the two magnetic objects 110, 110a, 110b are distanced from each other by a predetermined minimum distance. In embodiments, the predetermined minimum distance may be defined between respective dipole centers/ center of gravity of the two magnetic objects 110, 110a, 110b. In embodiments, the predetermined minimum distance is larger than the half of the median distance between two adjacent magnetometers of the plurality of magnetometers 300. In embodiments, the median distance between two adjacent magnetometers is measured between their respective centers.

In the sixth example arrangement according to Figs. 11a, 11b, the first magnetic object 110a is fixedly coupled to the housing 101. In other words, the first magnetic object 110a is non movably arranged in the housing 101. The second magnetic object 110b is arranged translatable and/or rotatable with respect to the housing 101 and with respect to the first magnetic object 110a. Specifically, the second magnetic object 110, 110b may be rotatable about the magnetic object rotation axis 112 and/or the second rotation axis 114 as previously described herein and as show in Figs. 1 to 10. Specifically, the second magnetic object 110b may be operationally coupled to the scroll manipulation feature 140 and to the click manipulation feature 150, 150a, 150b. An actuation of the at least one scroll manipulation feature 140 may cause a rotation of the second magnetic object 110b about the magnetic object rotation axis 112 with respect to the housing 101. An actuation of the at least one click manipulation feature 150 may cause a rotation of the second magnetic object 110b about the second rotation axis 114 with respect to the housing 101.

In embodiments, the first magnetic object 110a, more specifically the first magnetic moment vector 120a, may be oriented in a first direction and the second magnetic object 110b, more specifically the second magnetic moment vector 120b may be directed in a second direction. In embodiments, the first direction and the second direction may be inclined, more specifically, orthogonal to eaech other. Furthermore, the first direction may point towards the second magnetic object 110b, more specifically toward the center of mass of the second magnetic object 110b, or the second direction may point towards the first magnetic object 110a, more specifically to the center of mass of the first magnetic object 110a.In embodiments, the first magnetic object 110a and the second magnetic object 110b may comprise different magnetic strengths.

In comparison to the system 10 associated with the user-borne device 100 of the fifth example arrangement, the system 10 associated with the user-borne device 100 of the sixth example arrangement may be configured to detect a scroll event only when the tracked movement of the second magnetic object 110b includes a change of orientation of the second magnetic moment vector 120b with respect to the first magnetic moment vector 120a. In other words, the system 10 may be configured to detect a scroll event only when the tracked movement of the second magnetic object 110b includes a change of orientation of the second body axis 116b of the second magnetic object 110b with respect to the first body axis 116a of the first magnetic object 110a. In embodiments, the system 10 may be configured to detect a click event only when the tracked movement of the second magnetic object 110b includes a change of orientation of the second magnetic moment vector 120b with respect to the first magnetic moment vector 120a. In other words, the system 10 may be configured to detect a click event only when the tracked movement of the second magnetic object 110b includes a change of orientation of the second body axis 116b of the second magnetic object 110b with respect to the first body axis 116a of the first magnetic object 110a.

### Seventh example arrangement

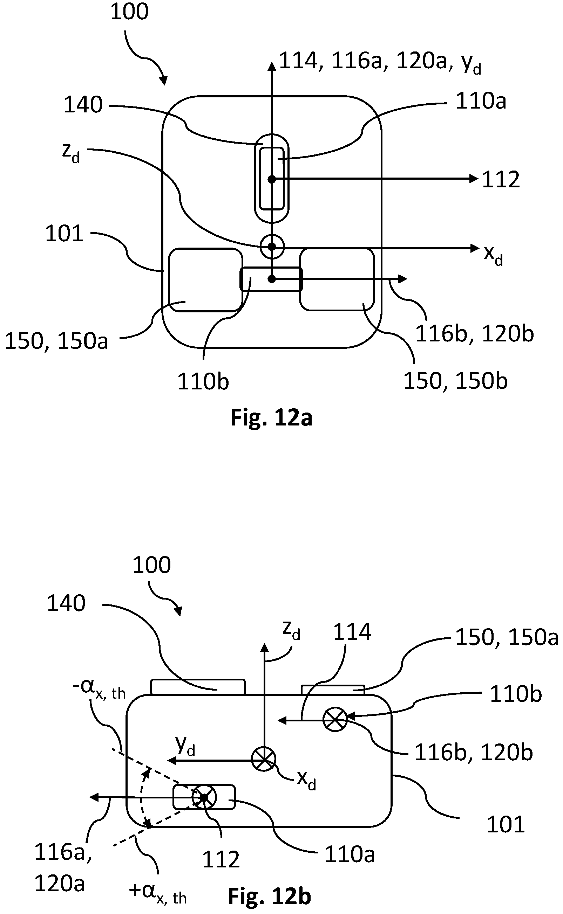

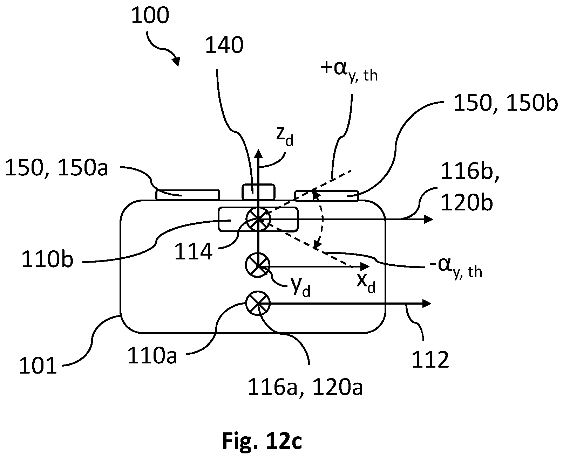

Figs. 12a, 12b show a seventh example arrangement of the user-borne device 100. In comparison to the fifth example arrangement, the user-borne device 100 comprises two magnetic objects 110a, 110b. The two magnetic objects 110a, 110b include a first magnetic object 110, 110a defining a first magnetic moment vector 120a along a first body axis 116a and a second magnetic object 110, 110b defining a second magnetic moment vector 120b along a second body axis 116b. The first magnetic object 110a and the second magnetic object 110b are arranged distanced from each other in the housing 101 of the user-borne device 100. In embodiments, the first magnetic object 110a and the second magnetic object 110b may be arranged at different orientations in the housing 101 of the user-borne device 100. By the provision of a second magnetic object, the reliability of the user-borne device 100 and associated system 10 may be increased. Furthermore, a risk of misinterpreting a rotation of the housing 101 as a click or scroll event may be prevented or at least reduced.

In embodiments, the first magnetic object 110a may comprise a body, specifically a longitudinal body, extending along the first body axis 116a. The first body axis 116a may define the first magnetic moment vector 120a of the first magnetic object 110a. The second magnetic object 110b may comprise a body, specifically a longitudinal body, extending along the second body axis 116b. The second body axis 116b may define the second magnetic moment vector 120b of the second magnetic object 110b.

In embodiments, the two magnetic objects 110, 110a, 110b are distanced from each other by a predetermined minimum distance. In embodiments, the predetermined minimum distance may be defined between respective dipole centers/ center of gravity of the two magnetic objects 110, 110a, 110b. In embodiments, the predetermined minimum distance is larger than the half of the median distance between two adjacent magnetometers of the plurality of magnetometers 300. In embodiments, the median distance between two adjacent magnetometers is measured between their respective centers.

In the seventh example arrangement according to Figs. 12a, 12b, first magnetic object 110a about is arranged translatable and/or rotatable with respect to the housing 101. The second magnetic object 110b is arranged translatable and/or rotatable with respect to the housing 101. In embodiments, the second magnetic object 110b may be arranged translatable and/or rotatable with respect to the first magnetic object 110a. The first magnetic object 110a may be operationally coupled to the scroll manipulation feature 140. Specifically, first magnetic object 110a may be operationally coupled to only the scroll manipulation feature 140. The second magnetic object 110b may be operationally coupled to the at least one click manipulation feature 150, 150a, 150b. Specifically, the second magnetic object 110b may be operationally coupled to only the at least one click manipulation feature 150, 150a, 150b.

Specifically, the first magnetic object 110a may be rotatable about the magnetic object rotation axis 112 as previously described herein and as show in Figs. 1 to 7. An actuation of the at least one scroll manipulation feature 140 may cause a rotation of the first magnetic object 110a about the magnetic object rotation axis 112 with respect to the housing 101.

Specifically, the second magnetic object 110, 110b may be rotatable about the second rotation axis 114 as previously described herein and as show in Figs. 8 to 12. An actuation of the at least one click manipulation feature 150 may cause a rotation of the second magnetic object 110b about the second rotation axis 114 with respect to the housing 101.

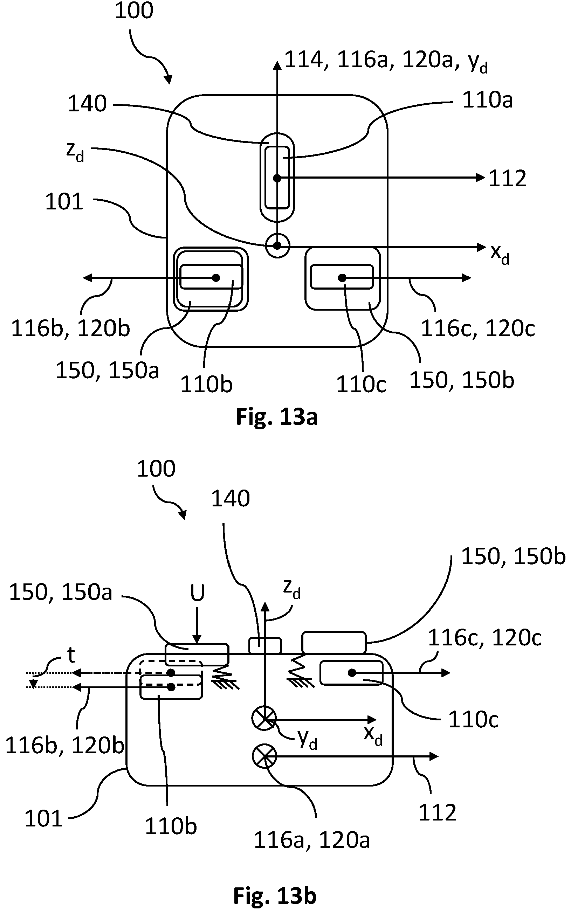

Eighth example arrangement Figs. 13a, 13b show an eighth example arrangement of the user-borne device 100. In comparison to the fifth example arrangement, the user-borne device 100 comprises three magnetic objects 110a, 110b, 110c. The three magnetic objects 110a, 110b, 110c include a first magnetic object 110, 110a defining a first magnetic moment vector 120a along a first body axis 116a, a second magnetic object 110, 110b defining a second magnetic moment vector 120b along a second body axis 116b, and a third magnetic object 110, 110c defining a third magnetic moment vector 120c along a third body axis 116c. The three magnetic objects 110a, 110b, 110c are arranged distanced from each other in the housing 101 of the user-borne device 100. In embodiments, three magnetic objects 110a, 110b, 110c may be arranged at different orientations in the housing 101 of the user-borne device 100. By the provision of a third magnetic object, the reliability of the user-borne device 100 and associated system 10 may be increased. Furthermore, a risk of misinterpreting a rotation of the housing 101 as a click or scroll event may be prevented or at least reduced.

In embodiments, the first magnetic object 110a may comprise a body, specifically a longitudinal body, extending along the first body axis 116a. The first body axis 116a may define the first magnetic moment vector 120a of the first magnetic object 110a. The second magnetic object 110b may comprise a body, specifically a longitudinal body, extending along the second body axis 116b. The second body axis 116b may define the second magnetic moment vector 120b of the second magnetic object 110b. The third magnetic object 110c may comprise a body, specifically a longitudinal body, extending along the third body axis 116c. The third body axis 116c may define the third magnetic moment vector 120c of the third magnetic object 110c.

In embodiments, the three magnetic objects 110a, 110b, 110c are distanced from each other by a predetermined minimum distance. In embodiments, the predetermined minimum distance may be defined between respective dipole centers/ center of gravity of the three magnetic objects 110a, 110b, 110c. In embodiments, the predetermined minimum distance is larger than the half of the median distance between two adjacent magnetometers of the plurality of magnetometers 300. In embodiments, the median distance between two adjacent magnetometers is measured between their respective centers.

In the eight example arrangement according to Figs. 13a, 13b, first magnetic object 110a about is arranged translatable and/or rotatable with respect to the housing 101. The second magnetic object 110b is arranged translatable and/or rotatable with respect to the housing 101. The third magnetic object 110c is arranged translatable and/or rotatable with respect to the housing 101. In embodiments, one or more of the first magnetic object 110a, the second magnetic object 110b and third magnetic object 110c may be arranged translatable and/or rotatable with respect to one or both of the respective others of the three magnetic objects 110a, 110b, 110c. The first magnetic object 110a may be operationally coupled to the scroll manipulation feature 140. Specifically, first magnetic object 110a may be operationally coupled to only the scroll manipulation feature 140.

The at least one click manipulation feature 150 may comprise a first click manipulation feature 150a and a second click manipulation feature 150b. The first click manipulation feature 150a, e.g. left click button, may be actuatable from the neutral position to the first actuated position, e.g. left click. The second click manipulation feature 150b, e.g. right click button, which may be actuatable from the neutral position to the second actuated position, e.g. right click.

The second magnetic object 110b may be operationally coupled to first click manipulation feature 150a. Specifically, the second magnetic object 110b may be operationally coupled only to the first click manipulation feature 150a. The third magnetic object 110c may be operationally coupled to second click manipulation feature 150b. Specifically, the second magnetic object 110b may be operationally coupled only to the second click manipulation feature 150b. An actuation of the first click manipulation feature 150a may cause a translation of the second magnetic object 110b which results in a translational displacement t of the second body axis 116b from an initial state to a displaced state with respect to the housing 101. An actuation of the second click manipulation feature 150b may cause a translation of the third magnetic object 110b which results in a translational displacement t of the third body axis 116b from an initial state to a displaced state with respect to the housing 101. Specifically, the translational displacement t of the body axis 116b, 116c may be orthogonally to the body axis 116b, 116c. In the neutral position of the at least one click manipulation feature 150, more specifically the first click manipulation feature 150a, the second magnetic object 110b is in the initial state. In the first actuated position of the at least one click manipulation feature 150, more specifically the first click manipulation feature 150a, the second magnetic object 110b is in the displaced state. In the neutral position of the at least one click manipulation feature 150, more specifically the second click manipulation feature 150b, the third magnetic object 110c is in the initial state. In the first actuated position of the at least one click manipulation feature 150, more specifically the second click manipulation feature 150b, the third magnetic object 110c is in the displaced state.

The system 10 may be configured to detect the translational displacement t of the body axis 116b, 116c and to determine a click event when the translational displacement t exceeds a predetermined threshold distance.

In embodiments, the system 10 may be configured to determine a click event only when the translational displacement t between the initial state and the displaced state comprises, specifically, consists of predetermined values of translations along the first device axis x_{d} and/or the second device axis y_{d} and/or the vertical device axis z_{d}.

In variations of the eighth exemplary arrangement, only two magnetic objects 110a, 110b may be provided. The second magnetic object 110b may be coupled to both manipulation features 150a, 150b. In the first actuated position of the at least one click manipulation feature 150, 150a, 150b the translational displacement t is larger than in the second actuated position of the at least one click manipulation feature 150. In other words, the at least one click manipulation feature 150, 150a, 150b may be configured to cause a larger translational displacement of the second magnetic object 110b when being actuated to the first actuated position than when being actuated to the second actuated position. For instance, the at least one click manipulation feature 150, 150a, 150b may comprise a lever mechanism to achieve the different translational displacements.

## Claims

1. A user-borne device (100) operable on an interaction surface (210), the user-borne device (100) comprising:
a housing (101),
at least one scroll manipulation feature (140) movably coupled to the housing (101) and actuatable by a user (U), and
at least one magnetic object (110) defining a magnetic moment vector (120), and being arranged rotatable and/or translatable with respect to the housing (101),
wherein the at least one magnetic object (110) is arranged in the housing (101) and operationally coupled to the scroll manipulation feature (140) such that an actuation of the scroll manipulation feature (140) causes a rotation of the at least one magnetic object (110) about a magnetic object rotation axis (112) with respect to the housing (101), **characterised in that**
the user-borne device (100) is electrically and/or electronically passive.

2. The user-borne device (100) of claim 1, wherein the at least one magnetic object (110) comprises a body extending along a body axis (116) which defines the magnetic moment vector (120), wherein the magnetic object rotation axis (112) is not parallel to the body axis (116) such that a rotation of the at least one magnetic object (110) about the magnetic object rotation axis (112) causes an angular displacement of the body axis (116) from an initial state to a displaced state along a first rotation angle (αₓ) with respect to the housing (101), and in particular wherein the magnetic object rotation axis (112) does not coincide with the body axis (116).

3. The user-borne device (100) of claim 1, wherein the at least one magnetic object (110) comprises a body extending along a body axis (116) which defines the magnetic moment vector (120), wherein the magnetic object rotation axis (112) is parallel to the body axis (116) such that a rotation of the at least one magnetic object (110) about the magnetic object rotation axis (112) causes a translational displacement (d) of the body axis (116) orthogonally to the body axis (116) from an initial state to a displaced state with respect to the housing (101), and wherein the magnetic object rotation axis (112) does not coincide with the body axis (116).

4. The user-borne device (100) of any one of the preceding claims, wherein the at least one scroll manipulation feature (140) comprises a scroll wheel (142) which defines a scroll wheel rotation axis (142a), wherein the scroll wheel (142) is arranged and configured to be rotated about the scroll wheel rotation axis (142a) with respect to the housing (101) upon actuation by the user (U), and wherein the at least one magnetic object (110) is coupled, particularly directly coupled, to the scroll wheel (142).

5. The user-borne device (100) of claim 4, wherein the scroll wheel (142) comprises a plurality of engagement features (144) selectively engageable with the at least one magnet (110) to cause the rotation of the at least one magnetic object (110).

6. The user-borne device (100) of any one of the preceding claims, if at least dependent on claim 2, wherein the at least one scroll manipulation feature (140) further comprises a biasing mechanism (145) which is coupled to the at least one magnetic object (110), wherein the biasing mechanism (145) is configured to urge, specifically to counterrotate, the at least one magnetic object (110) from the displaced state towards the initial state.

7. The user-borne device (100) of any one of claims 1 to 3, if at least dependent on claim 5, wherein the at least one scroll manipulation feature (140) comprises a tiltable button (146) which defines a tiltable button rotation axis (146a),wherein the tiltable button (146) is arranged and configured to be rotated about the tiltable button rotation axis (146a) with respect to the housing (101) upon actuation by the user (U), and wherein the tiltable button (146) is arranged tiltable about the tiltable button rotation axis (146a) with respect to the housing (101) between a neutral position and a maximally tilted position.

8. The user-borne device (100) of claim 7, wherein the at least one scroll manipulation feature (140) comprises a biasing mechanism (147) which is coupled to the tiltable button (146) and configured to tiltable bias the tiltable button (146) towards the neutral position.

9. The user-borne device (100) of any one of the preceding claims, if at least dependent on claim 3, wherein the at least one scroll manipulation feature (140) is arranged and configured to be rotatable with respect to the housing (101) upon actuation by the user (U), wherein the at least one magnetic object (110) is arranged such that the body axis (116) is parallel to the scroll wheel rotation axis (142a) of the at least one scroll manipulation feature (140), in particular wherein the at least one magnetic object (110) is arranged such that the body axis (116) distanced from the scroll wheel rotation axis (142a) of the at least one scroll manipulation feature (140).

10. The user-borne device (100) of any one of the preceding claims, wherein the user-borne device (100) further comprises at least one click manipulation feature (150, 150a, 150b) movably coupled to the housing (101) and actuatable by a user (U), and wherein the at least one magnetic object (110) is further operationally coupled to the at least one click manipulation feature (150, 150a, 150b) such that an actuation of the at least one click manipulation feature (150, 150a, 150b) causes a rotation and/or translation of the at least one magnetic object (110) with respect to the housing (101).

11. The user-borne device (100) of claim 10, wherein the at least one magnetic object (110) is operationally coupled to the at least one click manipulation feature (150, 150a, 150b) such that an actuation of the at least one click manipulation feature (150) causes a rotation of the at least one magnetic object (110) about a second rotation axis (114) with respect to the housing (101), wherein the second rotation axis (114) is orthogonally to the magnetic object rotation axis (112), in particular
wherein the second rotation axis (114) does not coincide with the body axis (116), and wherein the second rotation axis (114) is not parallel to the body axis (116) such that a rotation of the at least one magnetic object (110) about the second rotation axis (114) causes an angular displacement of the body axis (116) from an initial state to a displaced state along a second rotation angle (α_{y}) with respect to the housing (101).

12. The user-borne device (100) of any one of claims 10 to 11, comprising at least two magnetic objects (110, 110a, 110b, 110c) including a first magnetic object (110a) defining a first magnetic moment vector (120a) and a second magnetic object (110b) defining a second magnetic moment vector (120b), wherein the first magnetic object (110a) and the second magnetic object (110b) are arranged distanced from each other and at different orientations in the housing (101) of the user-borne device (100), in particular
wherein the first magnetic object (110a) is operationally coupled to the scroll manipulation feature (140) and wherein the second magnetic object (110b) is operationally coupled to the at least one click manipulation feature (150, 150a, 150b).

13. A system (10) for determining a manipulation of a user-borne device (100) by a user (U), the system (10) comprising:
the user-borne device (100) according to any one of the preceding claims, and
a plurality of magnetometers (300) configured to create a sensing volume and configured to measure a magnetic field associated with the at least one magnetic object (110),
wherein the system (10) is configured to track a movement of the at least one magnetic object (110) in at least five degrees of freedom, and
wherein the system (10) is configured to determine a scroll event when the tracked movement includes a rotation of the at least one magnetic object (110) about the magnetic object rotation axis (112)

14. The system (10) of claim 13, if at least dependent on claim 2, being configured to detect the angular displacement of the body axis (116) about the magnetic object rotation axis (112) and to determine a scroll event only when an absolute value the first rotation angle (αₓ) exceeds a first rotation angle threshold (α_{x, th}).

15. The system (10) of any one of claims 13 or 14, wherein the system (10) comprises or is connectable to a processing unit (400) which is configured to track a movement of the at least one magnetic object (110) in at least five degrees of freedom and which is configured to determine a scroll event and/or a click event.

## Patentansprüche

1. Benutzergetragene Vorrichtung (100), die auf einer Interaktionsoberfläche (210) betreibbar ist, wobei die benutzergetragene Vorrichtung (100) umfasst:
ein Gehäuse (101),
mindestens ein Bildlaufmanipulationsmerkmal (140), das beweglich an das Gehäuse (101) gekoppelt ist und von einem Benutzer (U) betätigbar ist, und
mindestens ein magnetisches Objekt (110), das einen magnetischen Momentvektor (120) definiert und in Bezug auf das Gehäuse (101) drehbar und/oder verschiebbar angeordnet ist,
wobei das mindestens eine magnetische Objekt (110) in dem Gehäuse (101) angeordnet und funktionsfähig an das Bildlaufmanipulationsmerkmal (140) gekoppelt ist, derart, dass eine Betätigung des Bildlaufmanipulationsmerkmals (140) eine Drehung des mindestens einen magnetischen Objekts (110) um eine Drehachse (112) des magnetischen Objekts relativ zu dem Gehäuse (101) bewirkt,
**dadurch gekennzeichnet, dass**
die benutzergetragene Vorrichtung (100) elektrisch und/oder elektronisch passiv ist.

2. Benutzergetragene Vorrichtung (100) nach Anspruch 1, wobei das mindestens eine magnetische Objekt (110) einen Körper umfasst, der sich entlang einer Körperachse (116) erstreckt, welche den magnetischen Momentvektor (120) definiert, wobei die Drehachse des magnetischen Objekts (112) nicht parallel zu der Körperachse (116) ist, so dass eine Drehung des mindestens einen magnetischen Objekts (110) um die Drehachse des magnetischen Objekts (112) eine Winkelverschiebung der Körperachse (116) von einem Anfangszustand zu einem verschobenen Zustand entlang eines ersten Drehwinkels (αₓ) bezüglich des Gehäuses (101) verursacht, und insbesondere wobei die Drehachse des magnetischen Objekts (112) nicht mit der Körperachse (116) zusammenfällt.

3. Benutzergetragene Vorrichtung (100) nach Anspruch 1, wobei das mindestens eine magnetische Objekt (110) einen Körper umfasst, der sich entlang einer Körperachse (116) erstreckt, welche den magnetischen Momentvektor (120) definiert, wobei die Drehachse des magnetischen Objekts (112) parallel zu der Körperachse (116) ist, so dass eine Drehung des mindestens einen magnetischen Objekts (110) um die Drehachse des magnetischen Objekts (112) eine translatorische Verschiebung (d) der Körperachse (116) orthogonal zu der Körperachse (116) von einem Anfangszustand zu einem verschobenen Zustand bezüglich des Gehäuses (101) verursacht, und wobei die Drehachse des magnetischen Objekts (112) nicht mit der Körperachse (116) zusammenfällt.

4. Benutzergetragene Vorrichtung (100) nach einem der vorstehenden Ansprüche, wobei das mindestens eine Bildlaufmanipulationsmerkmal (140) ein Bildlaufrad (142) umfasst, welches eine Bildlaufraddrehachse (142a) definiert, wobei das Bildlaufrad (142) angeordnet und konfiguriert ist, um bezüglich des Gehäuses (101) bei Betätigung durch den Benutzer (U) um die Bildlaufraddrehachse (142a) gedreht zu werden, und wobei das mindestens eine magnetische Objekt (110) an das Bildlaufrad (142) gekoppelt, insbesondere direkt gekoppelt, ist.

5. Benutzergetragene Vorrichtung (100) nach Anspruch 4, wobei das Bildlaufrad (142) eine Vielzahl von Eingriffsmerkmalen (144) umfasst, die selektiv mit dem mindestens einen Magnet (110) in Eingriff bringbar sind, um die Drehung des mindestens einen magnetischen Objekts (110) zu bewirken.

6. Benutzergetragene Vorrichtung (100) nach einem der vorstehenden Ansprüche, wenn mindestens abhängig von Anspruch 2, wobei das mindestens eine Bildlaufmanipulationsmerkmal (140) ferner einen Vorspannmechanismus (145) umfasst, der mit dem mindestens einen magnetischen Objekt (110) gekoppelt ist, wobei der Vorspannmechanismus (145) konfiguriert ist, um das mindestens eine magnetische Objekt (110) aus dem verschobenen Zustand in Richtung des Ausgangszustands zu drücken, insbesondere gegenläufig zu drehen.

7. Benutzergetragene Vorrichtung (100) nach einem der Ansprüche 1 bis 3, wenn mindestens abhängig von Anspruch 5, wobei das mindestens eine Bildlaufmanipulationsmerkmal (140) eine neigbare Taste (146) umfasst, welche eine Drehachse (146a) der neigbaren Taste definiert, wobei die neigbare Taste (146) angeordnet und konfiguriert ist, um bei Betätigung durch den Benutzer (U) um die Drehachse der neigbaren Taste (146a) bezüglich des Gehäuses (101) gedreht zu werden, und wobei die neigbare Taste (146) um die Drehachse der neigbaren Taste (146a) bezüglich des Gehäuses (101) zwischen einer Nullstellung und einer maximal geneigten Position neigbar angeordnet ist.

8. Benutzergetragene Vorrichtung (100) nach Anspruch 7, wobei das mindestens eine Bildlaufmanipulationsmerkmal (140) einen Vorspannmechanismus (147) umfasst, welcher an die neigbare Taste (146) gekoppelt ist und konfiguriert ist, um die neigbare Taste (146) neigbar in Richtung der Nullstellung vorzuspannen.

9. Benutzergetragene Vorrichtung (100) nach einem der vorstehenden Ansprüche, wenn mindestens abhängig von Anspruch 3, wobei das mindestens eine Bildlaufmanipulationsmerkmal (140) angeordnet und konfiguriert ist, um in Bezug auf das Gehäuse (101) bei Betätigung durch den Benutzer (U) drehbar zu sein, wobei das mindestens eine magnetische Objekt (110) derart angeordnet ist, dass die Körperachse (116) parallel zu der Bildlaufraddrehachse (142a) des mindestens einen Bildlaufmanipulationsmerkmals (140) ist, insbesondere wobei das mindestens eine magnetische Objekt (110) derart angeordnet ist, dass die Körperachse (116) von der Bildlaufraddrehachse (142a) des mindestens einen Bildlaufmanipulationsmerkmals (140) beabstandet ist.

10. Benutzergetragene Vorrichtung (100) nach einem der vorstehenden Ansprüche, wobei die benutzergetragene Vorrichtung (100) ferner mindestens ein Klick-Manipulationsmerkmal (150, 150a, 150b) umfasst, das beweglich an das Gehäuse (101) gekoppelt ist und von einem Benutzer (U) betätigbar ist, und wobei das mindestens eine magnetische Objekt (110) ferner funktionsfähig an das mindestens eine Klick-Manipulationsmerkmal (150, 150a, 150b) gekoppelt ist, derart, dass eine Betätigung des mindestens einen Klick-Manipulationsmerkmals (150, 150a, 150b) eine Rotation und/oder Translation des mindestens einen magnetischen Objekts (110) bezüglich des Gehäuses (101) bewirkt.

11. Benutzergetragene Vorrichtung (100) nach Anspruch 10, wobei das mindestens eine magnetische Objekt (110) funktionsfähig an das mindestens eine Klick-Manipulationsmerkmal (150, 150a, 150b) gekoppelt ist, derart, dass eine Betätigung des mindestens einen Klick-Manipulationsmerkmals (150) eine Drehung des mindestens einen magnetischen Objekts (110) um eine zweite Drehachse (114) bezüglich des Gehäuses (101) bewirkt, wobei die zweite Drehachse (114) orthogonal zu der Drehachse des magnetischen Objekts (112) ist, insbesondere
wobei die zweite Drehachse (114) nicht mit der Körperachse (116) zusammenfällt, und wobei die zweite Drehachse (114) nicht parallel zu der Körperachse (116) ist, so dass eine Drehung des mindestens einen magnetischen Objekts (110) um die zweite Drehachse (114) eine Winkelverschiebung der Körperachse (116) von einem Anfangszustand zu einem verschobenen Zustand entlang eines zweiten Drehwinkels (α_{y}) bezüglich des Gehäuses (101) bewirkt.

12. Benutzergetragene Vorrichtung (100) nach einem der Ansprüche 10 bis 11, umfassend mindestens zwei magnetische Objekte (110, 110a, 110b, 110c) einschließlich eines ersten magnetischen Objekts (110a), das einen ersten magnetischen Momentvektor (120a) definiert, und eines zweiten magnetischen Objekts (110b), das einen zweiten magnetischen Momentvektor (120b) definiert, wobei das erste magnetische Objekt (110a) und das zweite magnetische Objekt (110b) voneinander beabstandet und in unterschiedlichen Orientierungen in dem Gehäuse (101) der vom Benutzer getragenen Vorrichtung (100) angeordnet sind, insbesondere
wobei das erste magnetische Objekt (110a) funktionsfähig gekoppelt an das Bildlaufmanipulationsmerkmal (140) ist und wobei das zweite magnetische Objekt (110b) funktionsfähig an das mindestens eine Klick-Manipulationsmerkmal (150, 150a, 150b) gekoppelt ist.

13. System (10) zum Bestimmen einer Manipulation einer benutzergetragenen Vorrichtung (100) durch einen Benutzer (U), wobei das System (10) umfasst:
die benutzergetragene Vorrichtung (100) nach einem der vorstehenden Ansprüche, und
eine Vielzahl von Magnetometern (300), die konfiguriert sind, um ein Erfassungsvolumen zu erzeugen und konfiguriert sind, ein Magnetfeld zu messen, das dem mindestens einen magnetischen Objekt (110) zugeordnet ist,
wobei das System (10) konfiguriert ist, um eine Bewegung des mindestens einen magnetischen Objekts (110) in mindestens fünf Freiheitsgraden zu verfolgen, und
wobei das System (10) konfiguriert ist, um ein Bildlaufereignis zu bestimmen, wenn die verfolgte Bewegung eine Drehung des mindestens einen magnetischen Objekts (110) um die Drehachse (112) des magnetischen Objekts umfasst

14. System (10) nach Anspruch 13, wenn mindestens abhängig von Anspruch 2, das konfiguriert ist, um die Winkelverschiebung der Körperachse (116) um die Drehachse (112) des magnetischen Objekts zu erfassen und ein Laufradereignis nur dann zu bestimmen, wenn ein Absolutwert des ersten Drehwinkels (αₓ) einen ersten Drehwinkelschwellenwert (αₓ, ₜₕ) überschreitet.

15. System (10) nach einem der Ansprüche 13 oder 14, wobei das System (10) eine Verarbeitungseinheit (400) umfasst oder mit einer solchen verbindbar ist, die konfiguriert ist, um eine Bewegung des mindestens einen magnetischen Objekts (110) in mindestens fünf Freiheitsgraden zu verfolgen und die konfiguriert ist, um ein Laufradereignis und/oder ein Klick-Ereignis zu bestimmen.

## Revendications

1. Dispositif porté par l'utilisateur (100) pouvant fonctionner sur une surface d'interaction (210), le dispositif porté par l'utilisateur (100) comprenant :
un logement (101),
au moins une caractéristique de manipulation de défilement (140) couplée de manière mobile au logement (101) et actionnable par un utilisateur (U), et
au moins un objet magnétique (110) définissant un vecteur de moment magnétique (120), et étant agencé pour pouvoir effectuer une rotation et/ou une translation par rapport au logement (101),
dans lequel l'au moins un objet magnétique (110) est agencé dans le logement (101) et couplé de manière fonctionnelle à la caractéristique de manipulation de défilement (140) de telle sorte qu'un actionnement de la caractéristique de manipulation de défilement (140) provoque une rotation de l'au moins un objet magnétique (110) autour d'un axe de rotation d'objet magnétique (112) par rapport au logement (101),
**caractérisé en ce que**
le dispositif porté par l'utilisateur (100) est électriquement et/ou électroniquement passif.

2. Dispositif porté par l'utilisateur (100) selon la revendication 1, dans lequel l'au moins un objet magnétique (110) comprend un corps s'étendant le long d'un axe de corps (116) qui définit le vecteur de moment magnétique (120), dans lequel l'axe de rotation d'objet magnétique (112) n'est pas parallèle à l'axe de corps (116) de telle sorte qu'une rotation de l'au moins un objet magnétique (110) autour de l'axe de rotation d'objet magnétique (112) provoque un déplacement angulaire de l'axe du corps (116) d'un état initial à un état déplacé le long d'un premier angle de rotation (αₓ) par rapport au logement (101), et en particulier dans lequel l'axe de rotation d'objet magnétique (112) ne coïncide pas avec l'axe de corps (116).

3. Dispositif porté par l'utilisateur (100) selon la revendication 1, dans lequel l'au moins un objet magnétique (110) comprend un corps s'étendant le long d'un axe de corps (116) qui définit le vecteur de moment magnétique (120), dans lequel l'axe de rotation d'objet magnétique (112) est parallèle à l'axe de corps (116) de telle sorte qu'une rotation de l'au moins un objet magnétique (110) autour de l'axe de rotation d'objet magnétique (112) provoque un déplacement en translation (d) de l'axe de corps (116) orthogonalement à l'axe de corps (116) d'un état initial à un état déplacé par rapport au logement (101), et dans lequel l'axe de rotation d'objet magnétique (112) ne coïncide pas avec l'axe de corps (116).

4. Dispositif porté par l'utilisateur (100) selon l'une quelconque des revendications précédentes, dans lequel l'au moins une caractéristique de manipulation de défilement (140) comprend une molette de défilement (142) qui définit un axe de rotation de molette de défilement (142a), dans lequel la molette de défilement (142) est agencée et conçue pour être entraînée en rotation autour de l'axe de rotation de molette de défilement (142a) par rapport au logement (101) lors d'un actionnement par l'utilisateur (U), et dans lequel l'au moins un objet magnétique (110) est couplé, en particulier directement couplé, à la molette de défilement (142).

5. Dispositif porté par l'utilisateur (100) selon la revendication 4, dans lequel la molette de défilement (142) comprend une pluralité de caractéristiques de mise en prise (144) pouvant être mises en prise sélectivement avec l'au moins un aimant (110) pour provoquer la rotation de l'au moins un objet magnétique (110).

6. Dispositif porté par l'utilisateur (100) selon l'une quelconque des revendications précédentes, si elle dépend au moins de la revendication 2, dans lequel l'au moins une caractéristique de manipulation de défilement (140) comprend en outre un mécanisme de sollicitation (145) qui est couplé à l'au moins un objet magnétique (110), dans lequel le mécanisme de sollicitation (145) est conçu pour pousser, spécifiquement pour entraîner en contre-rotation, l'au moins un objet magnétique (110) de l'état déplacé vers l'état initial.

7. Dispositif porté par l'utilisateur (100) selon l'une quelconque des revendications 1 à 3, si elle dépend au moins de la revendication 5, dans lequel l'au moins une caractéristique de manipulation de défilement (140) comprend un bouton inclinable (146) qui définit un axe de rotation de bouton inclinable (146a), dans lequel le bouton inclinable (146) est agencé et conçu pour être entraîné en rotation autour de l'axe de rotation de bouton inclinable (146a) par rapport au logement (101) lors d'un actionnement par l'utilisateur (U), et dans lequel le bouton inclinable (146) est agencé de manière inclinable autour de l'axe de rotation de bouton inclinable (146a) par rapport au logement (101) entre une position neutre et une position inclinée au maximum.

8. Dispositif porté par l'utilisateur (100) selon la revendication 7, dans lequel l'au moins une caractéristique de manipulation de défilement (140) comprend un mécanisme de sollicitation (147) qui est couplé au bouton inclinable (146) et conçu pour solliciter de manière inclinable le bouton inclinable (146) vers la position neutre.

9. Dispositif porté par l'utilisateur (100) selon l'une quelconque des revendications précédentes, si elle dépend au moins de la revendication 3, dans lequel l'au moins une caractéristique de manipulation de défilement (140) est agencée et conçue pour pouvoir entrer en rotation par rapport au logement (101) lors d'un actionnement par l'utilisateur (U), dans lequel l'au moins un objet magnétique (110) est agencé de telle sorte que l'axe de corps (116) est parallèle à l'axe de rotation de molette de défilement (142a) de l'au moins une caractéristique de manipulation de défilement (140), en particulier dans lequel l'au moins un objet magnétique (110) est agencé de telle sorte que l'axe de corps (116) est à distance de l'axe de rotation de molette de défilement (142a) de l'au moins une caractéristique de manipulation de défilement (140).

10. Dispositif porté par l'utilisateur (100) selon l'une quelconque des revendications précédentes, dans lequel le dispositif porté par l'utilisateur (100) comprend en outre au moins une caractéristique de manipulation de clic (150, 150a, 150b) couplée de manière mobile au logement (101) et actionnable par un utilisateur (U), et dans lequel l'au moins un objet magnétique (110) est en outre couplé de manière fonctionnelle à l'au moins une caractéristique de manipulation de clic (150, 150a, 150b) de telle sorte qu'un actionnement de l'au moins une caractéristique de manipulation de clic (150, 150a, 150b) provoque une rotation et/ou une translation de l'au moins un objet magnétique (110) par rapport au logement (101).

11. Dispositif porté par l'utilisateur (100) selon la revendication 10, dans lequel l'au moins un objet magnétique (110) est couplé de manière fonctionnelle à l'au moins une caractéristique de manipulation de clic (150, 150a, 150b) de telle sorte qu'un actionnement de l'au moins une caractéristique de manipulation de clic (150) provoque une rotation de l'au moins un objet magnétique (110) autour d'un second axe de rotation (114) par rapport au logement (101), dans lequel le second axe de rotation (114) est orthogonalement à l'axe de rotation d'objet magnétique (112), en particulier
dans lequel le second axe de rotation (114) ne coïncide pas avec l'axe de corps (116), et dans lequel le second axe de rotation (114) n'est pas parallèle à l'axe de corps (116) de telle sorte qu'une rotation de l'au moins un objet magnétique (110) autour du second axe de rotation (114) provoque un déplacement angulaire de l'axe de corps (116) d'un état initial à un état déplacé le long d'un second angle de rotation (α_{y}) par rapport au logement (101).

12. Dispositif porté par l'utilisateur (100) selon l'une quelconque des revendications 10 à 11, comprenant au moins deux objets
magnétiques (110, 110a, 110b, 110c) comportant un premier objet magnétique (110a) définissant un premier vecteur de moment magnétique (120a) et un second objet magnétique (110b) définissant un second vecteur de moment magnétique (120b), dans lequel le premier objet magnétique (110a) et le second objet magnétique (110b) sont agencés à distance l'un de l'autre et selon des orientations différentes dans le logement (101) du dispositif porté par l'utilisateur (100), en particulier
dans lequel le premier objet magnétique (110a) est couplé de manière fonctionnelle à la caractéristique de manipulation de défilement (140) et dans lequel le second objet magnétique (110b) est couplé de manière fonctionnelle à l'au moins une caractéristique de manipulation de clic (150, 150a, 150b).

13. Système (10) permettant de déterminer une manipulation d'un dispositif porté par l'utilisateur (100) par un utilisateur (U), le système (10) comprenant :
le dispositif porté par l'utilisateur (100) selon l'une quelconque des revendications précédentes, et
une pluralité de magnétomètres (300) conçus pour créer un volume de détection et conçus pour mesurer un champ magnétique associé à l'au moins un objet magnétique (110),
dans lequel le système (10) est conçu pour suivre un mouvement de l'au moins un objet magnétique (110) dans au moins cinq degrés de liberté, et
dans lequel le système (10) est conçu pour déterminer un événement de défilement lorsque le mouvement suivi comporte une rotation de l'au moins un objet magnétique (110) autour de l'axe de rotation d'objet magnétique (112)

14. Système (10) selon la revendication 13, si elle dépend au moins de la revendication 2, étant conçu pour détecter le déplacement angulaire de l'axe de corps (116) autour de l'axe de rotation d'objet magnétique (112) et pour déterminer un événement de défilement uniquement lorsqu'une valeur absolue du premier angle de rotation (αₓ) dépasse un premier seuil d'angle de rotation (αₓ, ₜₕ).

15. Système (10) selon l'une quelconque des revendications 13 ou 14, dans lequel le système (10) comprend ou peut être connecté à une unité de traitement (400) qui est conçue pour suivre un mouvement de l'au moins un objet magnétique (110) dans au moins cinq degrés de liberté et qui est conçue pour déterminer un événement de défilement et/ou un événement de clic.
